(19) Europäisches Patentamt / European Patent Office / Office européen des brevets

(11) EP 2 703 062 B1

(12) **FASCICULE DE BREVET EUROPEEN**

(45) Date de publication et mention de la délivrance du brevet:
**12.10.2022 Bulletin 2022/41**

(21) Numéro de dépôt: **13306121.8**

(22) Date de dépôt: **02.08.2013**

(51) Classification Internationale des Brevets (IPC):
***B01D 53/14*** *(2006.01)* ***B01D 53/18*** *(2006.01)*

(52) Classification Coopérative des Brevets (CPC):
**B01D 53/1493; B01D 53/1462;** B01D 53/18; B01D 2252/20484; B01D 2252/20489; B01D 2252/604; B01D 2256/24; B01D 2257/304; B01D 2257/504; B01D 2258/02; B01D 2258/0233; B01D 2258/025; B01D 2258/0283; B01D 2258/0291; B01D 2258/05

(54) **PROCÉDÉ D'ABSORPTION DE COMPOSÉS ACIDES CONTENUS DANS UN EFFLUENT GAZEUX AU MOYEN D'UNE SOLUTION AQUEUSE A BASE D'AMINE.**

VERFAHREN ZUR ABSORPTION VON SÄUREVERBINDUNGEN, DIE IN GASHALTIGEM AUSFLUSS ENTHALTEN SIND, MITTELS EINER WÄSSRIGEN LÖSUNG AUF AMINBASIS

METHOD FOR ABSORBING ACID COMPOUNDS CONTAINED IN A GASEOUS EFFLUENT BY MEANS OF AN AMINE-BASED AQUEOUS SOLUTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.08.2012 FR 1202329**

(43) Date de publication de la demande:
**05.03.2014 Bulletin 2014/10**

(73) Titulaire: **IFP Energies nouvelles**
**92500 Rueil-Malmaison (FR)**

(72) Inventeurs:
- **Kittel, Jean**
  **69003 LYON (FR)**
- **Gonzalez, Serge**
  **69330 JONAGE (FR)**
- **Lemaire, Eric**
  **69480 ANSE (FR)**
- **Bonneau, Alexandre**
  **69290 CRAPONNE (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**FR-A1- 2 938 453**
**FR-A1- 2 948 578**
**FR-A1- 2 953 145**
**FR-A1- 2 953 146**
**US-A- 3 535 260**
**US-A- 3 535 263**
**US-A1- 2009 205 496**

- **FREEMAN S A ET AL: "Degradation of aqueous piperazine in carbon dioxide capture", INTERNATIONAL JOURNAL OF GREENHOUSE GAS CONTROL, ELSEVIER LTD, GB, vol. 4, no. 5, 1 septembre 2010 (2010-09-01), pages 756-761, XP027194066, ISSN: 1750-5836 [extrait le 2010-04-10]**
- **RENNIE S: "Corrosion and materials selection for amine service", MATERIALS FORUM, vol. 30, 30 octobre 2005 (2005-10-30), pages 126-130, XP002699251,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 703 062 B1

## Description

La présente invention concerne le domaine de la désacidification d'un effluent gazeux, par exemple la décarbonatation des fumées de combustion ou la désacidification d'un gaz naturel, au moyen d'une solution aqueuse comportant des amines. Plus précisément la présente invention propose une technique pour réduire à la fois la dégradation des amines et la corrosion des équipements.

La désacidification des effluents gazeux, tels que par exemple le gaz naturel et les fumées de combustion, est généralement réalisée par lavage par une solution absorbante. La solution absorbante permet d'absorber les composés acides présents dans l'effluent gazeux (H2S, mercaptans, CO2, COS, SO2, CS2).

La désacidification de ces effluents, notamment la décarbonatation et la désulfuration, impose des contraintes spécifiques à la solution absorbante, en particulier une stabilité thermique et chimique notamment face aux impuretés de l'effluent, à savoir essentiellement l'oxygène, les SOx et les NOx. L'oxygène peut aussi entrer en contact avec la solution absorbante sans être forcément présent dans l'effluent gazeux à traiter comme dans le cas par exemple d'une entrée accidentelle d'air au niveau des bacs de stockage de la solution absorbante.

Les solutions absorbantes les plus utilisées aujourd'hui sont les solutions aqueuses d'alcanolamines. On peut citer les documents FR 2 820 430 ou US 7056482 qui proposent des procédés de désacidification d'effluents gazeux.

Toutefois, il est bien connu de l'homme de l'art que les amines utilisées pour la désacidification d'un effluent gazeux présentent l'inconvénient majeur d'être corrosives pour les aciers constitutifs des installations. En effet, les installations de mise en œuvre de procédé de désacidification sont couramment réalisées en acier faiblement allié. L'acier faiblement allié correspond à un acier dont la teneur en chacun des éléments d'addition est inférieure à 5 % massique et dont la teneur en manganèse est inférieure à 1% massique. La corrosion désigne l'altération de l'acier par réaction chimique avec un oxydant (le dioxygène et le cation H+ en majorité).

Pour pallier le problème de corrosion des équipements, à défaut de pouvoir diminuer la concentration en amine, et/ou diminuer le taux de charge en CO2 et/ou diminuer la température, une solution est d'ajouter dans la solution absorbante des composés dits inhibiteurs de corrosion ou additifs anti-corrosion.

Les inhibiteurs les plus efficaces appartiennent à la famille des composés inorganiques. Des additifs à base d'antimoine ou de vanadium sont cités dans les brevets GB 1393302, GB 1360836, US 3959170 ou EP 0043525. Des additifs à base de cuivre sont décrits dans les brevets US 4071470, US 4440731, US4477419, US 4595723 et US 4596849. D'autres sels de métaux lourds présentent également des bonnes propriétés inhibitrices de la corrosion, comme décrit dans les brevets US4452764, US4100099, US4100100 et US4431563.

Une autre famille d'inhibiteurs organiques est également souvent proposée. Le brevet US2011/0300044 décrit l'utilisation d'imidazole, de dodécylamine ou de morpholine. Ces types d'inhibiteurs de corrosion présentent toutefois une efficacité moindre par rapport aux inhibiteurs inorganiques.

Ces inhibiteurs de corrosion présentent toutefois plusieurs inconvénients majeurs. Les inhibiteurs inorganiques contiennent très généralement des sels de métaux lourds qui présentent souvent un niveau élevé de toxicité vis-à-vis de l'environnement. D'autre part, ils ont tendance à favoriser la dégradation de l'amine. Les inhibiteurs organiques ont généralement un effet plus neutre vis-à-vis de la dégradation de l'amine, mais leur efficacité contre la corrosion est également moindre.

Un second inconvénient majeur est que les amines de la solution absorbante se dégradent dans les conditions de mise en œuvre, en particulier par réaction chimique d'oxydation avec certains constituants du gaz à traiter.

Des solutions spécifiques existent également pour pallier ce problème de dégradation. A défaut de pouvoir limiter ou supprimer la présence d'oxygène dans la solution absorbante, une solution consiste à ajouter dans la solution absorbante des composés dont le rôle est de prévenir ou limiter les phénomènes de dégradation des composés amines, notamment la dégradation engendrée par les phénomènes d'oxydation. Ces composés sont couramment nommés agents ou additifs inhibiteurs de dégradation. Les principaux modes d'action connus des agents inhibiteurs de dégradation consistent selon leur nature en une réaction de type réduction et/ou en un captage, un piégeage et/ou une stabilisation des radicaux formés dans la solution absorbante afin de limiter ou d'empêcher ou d'interrompre les réactions, notamment les réactions en chaîne, de dégradation.

Le brevet US 5686016 cite des additifs utilisés pour limiter la dégradation de solutions absorbantes utilisées pour la désacidification du gaz naturel, en particulier les oximes.

Le brevet US 7056482 cite des additifs utilisés pour limiter la dégradation de solutions absorbantes utilisées pour le captage du CO2, tels les alcools, les thiosulfates, les amines phénoliques, les amines aromatiques et les sulfites.

Le brevet WO11064469 des additifs dérivés du thiazole ou de l'oxazole pour limiter la dégradation d'une solution d'amine utilisée pour la désacidification d'un effluent gazeux. Pour la même application, le brevet WO11064470 cite l'utilisation de dérivés de la pyrimidine ou de la triazine ; le brevet WO09156618 décrit des inhibiteurs à fonction thiocarbonyle.

Ces inhibiteurs de dégradation ont généralement un effet neutre ou négatif vis-à-vis de la corrosion. Ils voient par ailleurs leur efficacité sensiblement réduite en présence de cations métalliques dissous issus de la corrosion des

équipements.

Du point de vue de l'utilisateur du procédé de désacidification d'effluents gazeux, il est donc toujours nécessaire de combiner une solution anti-dégradation avec une solution anti-corrosion.

Le brevet US4477419 cite une méthode permettant de diminuer la corrosion et la dégradation par la présence d'ions cuivre en solution. Pour le bon fonctionnement de la méthode, il est toutefois nécessaire d'ajouter dans le procédé de désacidification des étapes d'élimination continue du fer dissous et des produits de dégradation de l'amine au moyen de filtration mécanique et traitements chimiques sur charbons actifs et résines échangeuses d'ions. Il est nécessaire également de prendre des mesures spécifiques pour éviter des dépôts de cuivre métallique sur les équipements en acier, pouvant conduire localement à une aggravation de la corrosion par effet de couplage galvanique. Ces étapes compliquent sensiblement l'opération du procédé de désacidification et augmentent les coûts d'investissement et d'opération.

Le brevet FR2938453 propose de réduire la dégradation d'une solution absorbante mise en œuvre dans une installation de traitement de désacidification d'un gaz en évitant le contact entre la solution et des surfaces en acier faiblement allié. Cette solution présente l'avantage de n'utiliser aucun additif chimique dans le solvant de désacidification. Elle présente toutefois des performances limitées. En particulier, comme montré dans l'exemple 1 ci-après, la dégradation de l'amine n'est en effet pas suffisamment réduite lorsque la teneur en amine est portée au delà de 30% poids.

FR2948578 décrit l'utilisation d'un dérivé d'un triazole ou d'un tétrazole, comportant au moins un substituant comportant un atome de soufre, comme inhibiteur de dégradation.

Ainsi, l'objet de la présente invention est donc de proposer une solution permettant de limiter à la fois la dégradation d'une solution d'amine, notamment pour une concentration supérieure ou égale à 30% poids, utilisée pour la désacidification d'un effluent gazeux, tout en évitant les problèmes de corrosion de l'installation.

De façon générale, l'invention concerne un procédé pour absorber des composés acides contenus dans un effluent gazeux, dans lequel on met en contact l'effluent gazeux avec une solution aqueuse comportant au moins une amine et au moins un composé inhibiteur de dégradation de l'amine. Le procédé comporte les étapes suivantes : - le composé inhibiteur de dégradation est un dérivé d'un triazole ou d'un tétrazole, comportant au moins un substituant comportant un atome de soufre; - on sélectionne au préalable un acier inoxydable de norme 1.4462 ou 1.4410 ou 1.4547 résistant à la corrosion lorsqu'il est en contact avec ledit composé inhibiteur de dégradation de l'amine ; et on utilise des équipements dont les surfaces en contact avec ladite solution aqueuse sont fabriquées avec ledit acier inoxydable.

Selon l'invention, on peut sélectionner l'acier inoxydable ayant une vitesse de corrosion la plus faible parmi un ensemble d'aciers inoxydables, ladite vitesse étant déterminée en présence dudit composé inhibiteur de dégradation. On peut en plus sélectionner l'acier inoxydable en fonction de la température de ladite solution aqueuse en contact avec ledit acier inoxydable.

On peut par exemple utiliser un acier inoxydable comprenant :

- au plus 0.03% de C,
- au moins 18% et jusqu'à 28% de Cr,
- au moins 2% et jusqu'à 8% de Mo,
- au moins 0.08% et jusqu'à 0.5%de N,
- moins de 31% de Ni,

On peut par exemple utiliser un acier inoxydable de type Duplex ou super duplex.

Lorsque la température de ladite solution aqueuse est inférieure à 90 °C, on peut par exemple utiliser un acier inoxydable comprenant :

- au plus 0.03% de C,
- au moins 18% et jusqu'à 28% de Cr,
- au moins 2% et jusqu'à 5% de Mo,
- au moins 0.1% et jusqu'à 0.3%de N,
- moins de 20% de Ni,

En revanche, lorsque la température de ladite solution aqueuse est supérieure à 90°C, on utilisera plutôt un acier inoxydable comprenant :

- au plus 0.03% de C,
- au moins 20% et jusqu'à 28% de Cr,
- au moins 2.5% et jusqu'à 8% de Mo,
- au moins 0.1% et jusqu'à 0.5%de N,
- moins de 31% de Ni,

Selon l'invention, la solution aqueuse d'amine peut comporter entre 10 % et 80 % poids d'amines choisies dans la liste constituée par la monoéthanolamine (MEA), la diéthanolamine, la diméthyléthanolamine, la diisopropylamine, la diglycolamine, la pipérazine, l'hydroxyéthyl piperazine, le 1,3-Bis(diméthylamino)-2-propanol, le 1,3-Bis(méthyléthylamino)-2-propanol, le 1,3-Bis(éthylamino)-2-propanol, le 1,3-Bis(diéthylamino)-2-propanol, le 1,3-bis(méthylamino)-2-propanol, le 1,3 Bis(npropylamino)-2-propanol, le 1,3-Bis(isopropylamino)-2-propanol, le 1,3 Bis(nbutylamino)-2-propanol, le 1,3-Bis(isobutylamino)-2-propanol, le 1,3 Bis(terbutylamino)-2-propanol, le 1,3-Bis[(2-hydroxyéthyl)méthylamino]-2-propanol, le 1,3-Bis(pipéridino)-2-propanol, et le 1,3-Bis(pyrrolidino)-2-propanol.

De préférence, la solution aqueuse comporte entre 30 % et 50 % poids de monoéthanolamine (MEA).

Selon un mode de réalisation, le composé inhibiteur de dégradation est un dérivé d'un triazole ou d'un tétrazole, comportant au moins un substituant comportant un atome de soufre. Par exemple, ledit composé inhibiteur de dégradation répond à l'une des formules générales suivantes :

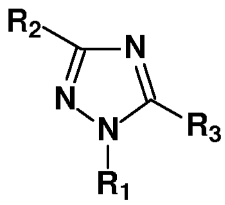
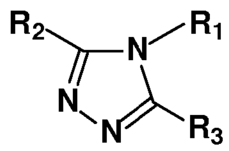
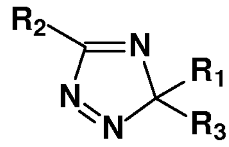

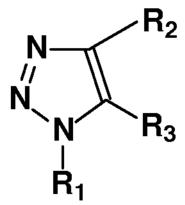
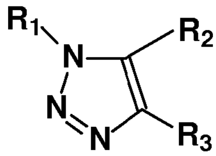
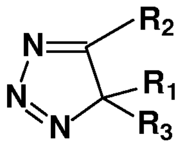

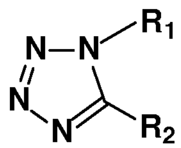
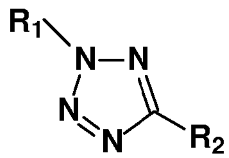
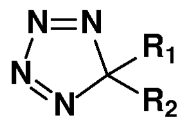

dans laquelle le radical R1 est choisi parmi :

- o un atome d'hydrogène,
- o un radical hydrocarboné comprenant 1 à 12 atomes de carbone,
- o un radical amino de formule générale -NR4R5 dans lequel le radical R4 et le radical R5 sont indépendamment choisis parmi :
  - o un atome d'hydrogène,
  - o un radical hydrocarboné comprenant 1 à 12 atomes de carbone,

et dans laquelle chacun des radicaux R2 et R3 est choisi indépendamment parmi les éléments suivants :

a) -S-X dans lequel le radical X est choisi parmi :

- o un atome d'hydrogène,
- o un élément alcalin ou alcalino-terreux,
- o un métal monovalent ou multivalent,
- o un cation ammonium NH4+ ou résultant de la protonation d'une fonction amine,
- o un cation phosphonium,
- o un radical hydrocarboné comprenant 1 à 12 atomes de carbone,
- o un radical choisi parmi un radical thiyl-triazole, thio-triazole, thiyl-tétrazole et thio-tétrazole,

b) un atome d'hydrogène,

c) un radical hydroxyle,

d) un radical amino de formule générale -NR4R5 dans lequel le radical R4 et le radical R5 sont indépendamment choisis parmi :

- o un atome d'hydrogène,
- o un radical hydrocarboné comprenant 1 à 12 atomes de carbone,

e) un radical comprenant 1 à 12 atomes de carbone.

Selon ce mode de réalisation, le composé inhibiteur de dégradation peut être choisi parmi le groupe contenant : le 1H-1,2,4-triazole-3-thiol, un sel du 1H-1,2,4-triazole-3-thiol, le 5-phényl-1H-1,2,4-triazole-3-thiol, un sel du 5-phényl-1H-1,2,4-triazole-3-thiol, le 5-(4-pyridyl)-1H-1,2,4-triazole-3-thiol, un sel du 5-(4-pyridyl)-1H-1,2,4-triazole-3-thiol, le 5-(3-pyridyl)-1H-1,2,4-triazole-3-thiol, un sel du 5-(3-pyridyl)-1H-1,2,4-triazole-3-thiol, le 4-méthyl-4H-1,2,4-triazole-3-thiol, un sel du 4-méthyl-4H-1,2,4-triazole-3-thiol, le 4-méthyl-5-(2-thienyl)-4H-1,2,4-triazole-3-thiol, un sel du 4-méthyl-5-(2-thienyl)-4H-1,2,4-triazole-3-thiol, le 4-méthyl-5-(3-thienylméthyl)-4H-1,2,4-triazole-3-thiol, un sel du 4-méthyl-5-(3-thienylméthyl)-4H-1,2,4-triazole-3-thiol, le 4-cyclohexyl-5-sulfanyl-4H-1,2,4-triazol-3-ol, un sel du 4-cyclohexyl-5-sulfanyl-4H-1,2,4-triazol-3-ol, le 3-amino-1,2,4-triazole-5-thiol, un sel du 3-amino-1,2,4-triazole-5-thiol, le 4-amino-4H-1,2,4-triazole-3,5-dithiol, un sel du 4-amino-4H-1,2,4-triazole-3,5-dithiol, le [1,2,4]triazolo[4,3-a]pyridine-3-thiol, un sel du [1,2,4]triazolo[4,3-a]pyridine-3-thiol, le 1H-5-mercapto-1,2,3-triazole, un sel du 1H-5-mercapto-1,2,3-triazole, le 1-méthyl-1H-tétrazole-5-thiol, un sel du 1-méthyl-1H-tétrazole-5-thiol, le 1-éthyl-1H-tétrazole-5-thiol, un sel du 1-éthyl-1H-tétrazole-5-thiol, le 1-phényl-1H-tétrazole-5-thiol, un sel du 1-phényl-1H-tétrazole-5-thiol, le 1-(4-hydroxyphényl)-1H-tétrazole-5-thiol, un sel du 1-(4-hydroxyphényl)-1H-tétrazole-5-thiol, l'acide 5-mercapto-1-tétrazoleacétique, un sel de l'acide 5-mercapto-1-tétrazoleacétique, le 1-[2-(diméthylamino)éthyl]-1H-tétrazole-5-thiol, un sel du 1-[2-(diméthylamino)éthyl]-1H-tétrazole-5-thiol, le 3-Amino-5-methylthio-1H-1,2,4-triazole, un sel du 3-Amino-5-methylthio-1H-1,2,4-triazole, le 5-(méthylthio)-1H-tétrazole, un sel du 5-(méthylthio)-1H-tétrazole, le 5-(éthylthio)-1H-tétrazole, un sel du 5-(éthylthio)-1H-tétrazole, le 1-méthyl-5-(méthylthio)-1H-tétrazole, un sel du 1-méthyl-5-(méthylthio)-1H-tétrazole, le 4-phényl-4H-1,2,4-triazole-3-thiol, un sel du 4-phényl-4H-1,2,4-triazole-3-thiol, le 5-méthyl-4H-1,2,4-triazole-3-thiol, un sel du 5-méthyl-4H-1,2,4-triazole-3-thiol, la 5-(trifluorométhyl)-2,4-dihydro-3H-1,2,4-triazole-3-thione, un sel de la 5-(trifluorométhyl)-2,4-dihydro-3H-1,2,4-triazole-3-thione, le 4-isopropyl-4H-1,2,4-triazole-3-thiol et un sel du 4-isopropyl-4H-1,2,4-triazole-3-thiol.

Ne relevant pas de l'invention revendiquée, le composé inhibiteur de dégradation est un dérivé répondant à l'une des formules suivantes:

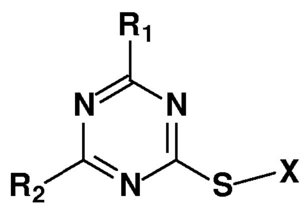
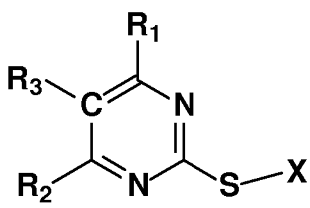

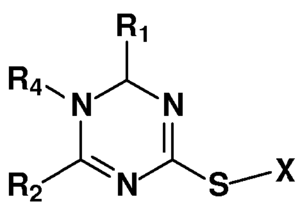
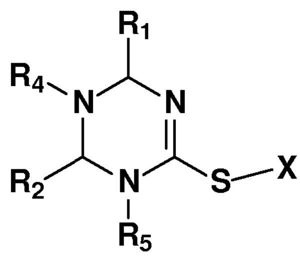
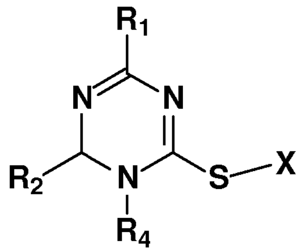

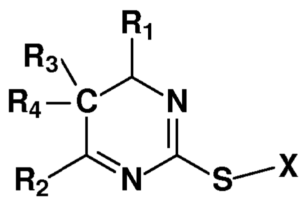

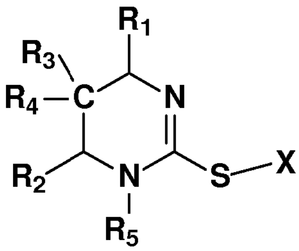

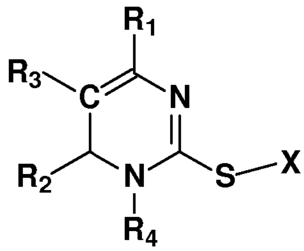

dans lesquelles X est choisi parmi

- ◦ un atome d'hydrogène,
- ◦ un élément alcalin ou alcalino-terreux,
- ◦ un métal monovalent ou multivalent,
- ◦ un cation ammonium $NH_4^+$ ou résultant de la protonation d'une fonction amine,
- ◦ un cation phosphonium,

dans lesquelles chacun des radicaux R1, R2 et R3 est choisi indépendamment parmi

- ◦ un atome d'hydrogène,
- ◦ un radical hydrocarboné comprenant 1 à 12 atomes de carbone,
- o un radical

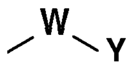

dans lequel W est choisi parmi un atome de soufre et un atome d'oxygène et Y est choisi parmi :

  - ◦ un atome d'hydrogène,
  - ◦ un radical hydrocarboné comprenant de 1 à 12 atomes de carbone,
  - ◦ un élément alcalin ou alcalino-terreux,
  - ◦ un métal monovalent ou multivalent,
  - ◦ un cation ammonium $NH_4^+$ ou résultant de la protonation d'une fonction amine,
  - ◦ un cation phosphonium,

et dans lesquelles chacun des radicaux R4 et R5 est choisi indépendamment parmi :
- ◦ un atome d'hydrogène,
- ◦ un radical hydrocarboné comprenant de 1 à 12 atomes de carbone.

Ne relevant pas de l'invention revendiquée, le composé inhibiteur de dégradation est un dérivé répondant à l'une des formules suivantes:

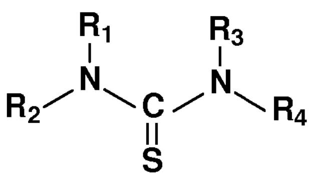

dans laquelle chacun des radicaux R1, R2, R3 et R4 est indifféremment choisi parmi :

- un atome d'hydrogène,
- un radical hydrocarboné comportant de 1 à 8 atomes de carbone,
- un radical aromatique ou hétérocyclique de 5 à 8 atomes de carbone,
- un radical hydroxyalkyle comprenant de 1 à 8 atomes de carbone,
- un radical alcoxy-alkyle, la fonction alcoxy comportant de 1 à 8 atomes de carbone, la fonction des alkyles comportant de 1 à 8 atomes de carbone,

- un radical ceto-alkyle comportant 1 à 8 atomes de carbone
- un radical répondant à la formule générale :

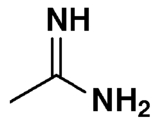

- un radical répondant à la formule générale :

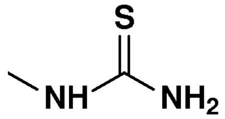

- un radical répondant à la formule générale :

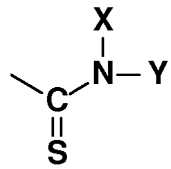

- un radical répondant à la formule générale :

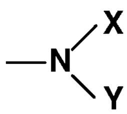

dans laquelle chacun des radicaux X et Y est choisi indifféremment parmi :

- un atome d'hydrogène,
- un radical hydrocarboné comportant de 1 à 8 atomes de carbone,
- un radical aromatique ou hétérocyclique comportant de 5 à 8 atomes de carbone,

Enfin, les composés acides peuvent appartenir à un groupe comportant le $CO_2$ et l'$H_2S$, et le procédé peut être mis en œuvre pour absorber des composés acides contenus dans l'un des effluents du groupe contenant le gaz naturel, les fumées de combustion, les gaz de synthèse, les gaz de raffinerie, les gaz obtenus en queue du procédé Claus, les gaz de fermentation de biomasse, les gaz de cimenterie et les fumées d'incinérateur.

D'autres caractéristiques et avantages de l'invention seront mieux compris et apparaîtront clairement à la lecture de la description faite ci-après en se référant à la figure 1 qui schématise un procédé de décarbonatation.

L'invention concerne un procédé pour absorber des composés acides, tels que $CO_2$ et $H_2S$, contenus dans un effluent gazeux, dans lequel on met en contact l'effluent gazeux avec une solution aqueuse comportant au moins une amine. L'effluent gazeux peut par exemple appartenir au groupe contenant le gaz naturel, les fumées de combustion, les gaz de synthèse, les gaz de raffinerie, les gaz obtenus en queue du procédé Claus, les gaz de fermentation de biomasse, les gaz de cimenterie et les fumées d'incinérateur.

Un exemple est décrit en référence à la figure 1. Le gaz à traiter arrive par le conduit 1 à une pression qui peut être comprise entre 1 et 150 bars absolus, et à une température qui peut être comprise entre 10 °C et 70°C. En général, les fumées sont à une pression comprise entre 1 et 10 bars absolus.

Le gaz peut être des fumées qui sont produites par combustion d'un combustible, par exemple des hydrocarbures liquides, du gaz naturel, du charbon, du bois, de la biomasse. Les fumées sont produites, par exemple, par une centrale de production électrique, par une cimenterie, par une usine de sidérurgie. Le gaz peut également être un gaz naturel, un gaz obtenu en queue du procédé Claus, un gaz de synthèse, un gaz issu de la fermentation de biomasse, un effluent issu d'une cimenterie ou d'une usine de sidérurgie.

Le gaz peut contenir des composés acides tels que le $CO_2$ ou de l'$H_2S$ entre 0,1% et 30% volume. En général, les fumées contiennent du $CO_2$ entre 5% et 30% volume. La teneur en composés de type SOx et NOx dans les fumées

peut atteindre une valeur de l'ordre de 200 mg/Nm$^3$ volume pour chacun desdits composés. De plus les fumées contiennent de l'oxygène qui peut varier entre 1% et 15% en volume.

Le gaz arrivant par le conduit 1 peut être comprimé par l'organe A. Par exemple, dans le cas d'une fumée de combustion, l'élément A est une soufflante ou un compresseur assurant une augmentation de pression de l'ordre de 150 à 200 mbar.

Le gaz est introduit par le conduit 2 dans la section d'absorption B1 munie d'éléments de mise en contact entre gaz et liquide, par exemple des plateaux, un garnissage en vrac ou un garnissage structuré. Dans la section B1, le gaz est mis en contact avec la solution absorbante arrivant par le conduit 12. Le gaz circule à contre-courant de la solution liquide. La solution absorbante capte les composés acides, notamment le $CO_2$ contenu dans le gaz. On évacue par le conduit 4 en fond de la section B1 une solution absorbante chargée en composés acides. On obtient un flux de gaz appauvri en composés acides en tête de la section B1, ce flux étant représenté par la flèche 32.

La composition de la solution absorbante est choisie pour sa capacité à absorber les composés acides. On peut mettre en œuvre une solution aqueuse comportant, en général entre 10% et 80%, de préférence entre 20% et 60%, en poids d'amines, de préférence des alcanolamines.

La solution absorbante peut contenir, par ailleurs, un tiers composé de façon à favoriser la solubilité physique des composés acides à absorber. Ce tiers composé peut être, par exemple et de façon non limitative du méthanol, du sulfolane, des polyéthylèneglycols qui peuvent être éthérifiés, des pyrrolidones ou dérivés comme par exemple la N-méthylpyrrolidone, le méthanol, la N-formyl morpholine, l'acétyl morpholine, le carbonate de propylène. Ce tiers composé peut représenter entre 0 à 100% en poids de l'amine.

La solution absorbante évacuée en fond de la section B1 est pompée, chauffée dans l'échangeur de chaleur F, puis introduite dans la colonne de régénération G. En général, on envoie la totalité de la solution absorbante dans la colonne de régénération.

Alternativement, on peut séparer la solution absorbante obtenue en fond de la section B1 en deux fractions, et n'envoyer qu'une seule fraction dans la colonne de régénération G. Par exemple, on peut séparer la solution absorbante chargée en composés acides en une fraction riche en composés acides et une fraction pauvre en composés acides. La fraction riche en composés acides est envoyée dans la colonne G, la fraction pauvre en composés acides est recyclée en étant introduite en tête de la section d'absorption. Ce mode de réalisation est détaillé par le document FR 2 877 858.

La colonne de régénération G est équipée d'internes de séparation gaz/liquide, par exemple des plateaux, des garnissages en vrac ou structurés. Le fond de la colonne G est équipé d'un rebouilleur J qui apporte la chaleur nécessaire à la régénération. Dans la colonne G, les composés acides sont libérés sous forme gazeuse et évacués en tête de G par le conduit 22.

La solution absorbante régénérée, c'est-à-dire appauvrie en composés acides, est évacuée en fond de la colonne G par le conduit 6, pompée par la pompe K, et introduite par le conduit 9 dans l'échangeur F pour être refroidie. La solution absorbante refroidie est évacuée par le conduit 10 pour être introduite dans le filtre H afin d'en retirer les particules et composés solides. La solution absorbante évacuée de H est refroidie dans l'échangeur de chaleur I puis introduit par le conduit 12 dans la section B1.

Avant recycle dans la section B1, la solution absorbante peut transiter dans un bac de stockage qui communique avec l'air ambiant. Dans le bac de stockage, la solution absorbante peut se charger en oxygène qui peut provoquer la dégradation de l'amine.

Le flux gazeux évacué en tête de G par le conduit 22 est partiellement condensé par refroidissement dans l'échangeur N puis introduit dans le séparateur O. Les condensats sont recyclés par le conduit 23 et la pompe M en tête de la colonne G à titre de reflux.

On obtient en tête de la colonne G un gaz riche en composés acides.

Dans le cas de la décarbonatation d'une fumée de combustion, on obtient en tête de la colonne G un gaz riche en $CO_2$. Le gaz évacué en tête du ballon O par le conduit 24 est liquéfié, en vue d'être injecté dans un réservoir souterrain. Le gaz peut être comprimé et déshydraté dans les organes P et Q pour obtenir un flux de $CO_2$ liquide à 110 bars environ et d'une très grande pureté, par exemple supérieure à 99% volume de $CO_2$.

Une partie de la solution absorbante régénérée obtenue en fond de G peut être introduite par le conduit 8 dans l'appareil de vaporisation L, couramment nommé "reclaimer". Dans l'appareil L, la solution absorbante est chauffée jusqu'à être vaporisée. Les vapeurs sont évacuées de L par le conduit 7 pour être introduites dans la colonne G. Les sels formés par la dégradation de l'amine restent à l'état solide en solution liquide au fond de L et sont extraits cycliquement et évacués par le conduit 31. Au niveau du conduit 8, on peut ajouter de l'eau et éventuellement une base forte, par exemple une solution d'hydroxyde de sodium, pour neutraliser les sels, les acides et pour réguler la température de vaporisation. Compte tenu de la réduction de la dégradation de l'amine selon l'invention, le dispositif "reclaimer" est, en conséquence, réduit tant au niveau de la taille que du coût de fonctionnement.

Pour limiter les pertes d'amine entraînées par le gaz purifié 32, on effectue un lavage à l'eau du gaz pour récupérer les molécules d'amine présentes dans le gaz purifié. Le gaz 32 est introduit dans la section de lavage B3 pour être mis en contact, à contre-courant, avec l'eau arrivant par le conduit 17. La section B3 comporte des éléments

de mise en contact entre gaz et liquide, par exemple des plateaux, un garnissage en vrac ou un garnissage structuré. Le gaz purifié et débarrassé des traces d'amines est évacué de B3 par le conduit 18. L'eau chargée en amine est récupérée en fond de la section de lavage B3.

L'alimentation en eau est effectuée par le conduit 15. L'eau peut être chauffée ou refroidie par l'échangeur de chaleur D, par exemple en utilisant de la vapeur ou de l'eau du procédé. Puis l'eau est introduite par le conduit 17 dans la section de lavage B3.

De préférence, on maintient une température du gaz sortant par le conduit 18 supérieure ou égale à la température du flux 32 entrant dans la zone B3 afin d'éviter une augmentation de volume d'eau dans la boucle de lavage. En effet, si le gaz se refroidissait lors du passage dans la section B3, alors la quantité d'eau contenue dans le gaz serait moins importante en sortie et provoquerait une augmentation du volume d'eau dans la boucle de lavage. On peut contrôler et modifier la température de l'eau introduite dans B3 au moyen de l'échangeur de chaleur D.

Comme représenté sur la figure 1, la section d'absorption B1 et la section de lavage B3 peuvent être disposées dans la même colonne B. Dans ce cas, on peut disposer un plateau B2 étanche au liquide permettant le passage du gaz de la section B1 vers la section B3. Alternativement, la section d'absorption B1 peut être opérée dans une première colonne, et la section de lavage B3 peut être opérée dans une deuxième colonne distincte de la première colonne. La tête de la première colonne étant équipée d'un conduit connecté au fond de la deuxième colonne pour transférer le gaz purifié de la première colonne à la deuxième colonne.

De plus, pour limiter les pertes de liquide dans le flux évacué par le conduit 18, on peut disposer un moyen B4 de séparation mécanique entre gaz et liquide en tête de la section B1. Par exemple, le moyen B4 peut prendre la forme d'un plateau sec ou d'une hauteur de garnissage non alimentée par du liquide, ou la forme d'un matelas éliminateur de goutte.

On récupère une première portion de l'eau en fond de B3 par le conduit 13, la pompe C et on recycle l'eau par le conduit 14, puis 17 en tête de la section B3. Le débit global d'eau de lavage introduit dans B3 par le conduit 17 est déterminé de manière à obtenir un bon contact hydrodynamique dans la section de lavage B3 et pour capter suffisamment d'amine contenus dans le gaz afin de respecter la norme sur les rejets d'amine dans le gaz évacué par le conduit 18.

On peut extraire, par le conduit 19, une deuxième portion de l'eau obtenue en fond de B3 pour la recycler dans le procédé afin, d'une part, de compenser les pertes en eau et, d'autre part, de récupérer et réutiliser l'amine extraite du gaz purifié par lavage à l'eau. Plus précisément, on peut contrôler, au moyen de la vanne V, le débit de purge par le conduit 19 de manière à ce que le liquide prélevé par le conduit 19 en fond de la zone B3 contienne l'amine entraînée en tête de B1 et la quantité d'eau nécessaire à compenser les pertes en eau. Le recycle par le conduit 19 permet de limiter le volume d'appoint en amine nécessaire au fonctionnement du procédé. De plus, l'évacuation d'amine par le conduit de recycle 19 a pour but de réduire la concentration en amines dans la section de lavage B3 et donc d'obtenir un gaz ou des fumées traitées 18 ayant une très faible teneur en amine. En particulier, les fumées traitées 18 qui sont relâchées dans l'atmosphère doivent répondre aux normes quant à la quantité maximum admissible de composés organiques volatiles (COV).

En référence à la figure 1, l'eau prélevée par le conduit 19 peut être introduite à différents endroits dans le procédé.

L'eau peut être introduite par le conduit 21 dans le conduit 22 pour être mélangée avec le flux gazeux issu en tête de la colonne G. De préférence, l'eau est mélangée avec l'effluent gazeux refroidi par l'échangeur N. Pour effectuer ce mélange, l'eau peut être directement introduite dans le ballon O.

L'eau peut être introduite par le conduit 20 dans le conduit 10 pour être mélangée avec la solution absorbante régénérée obtenue en fond de G. De préférence, on mélange l'eau avec la solution absorbante régénérée qui a été refroidie après passage à travers l'échangeur F.

L'eau peut être introduite par le conduit 29 dans le conduit 4 pour être mélangée avec la solution absorbante chargée en composés acides en fond de B1. De préférence, on mélange l'eau avec la solution absorbante chargée en composés acides, en amont de l'échangeur de chaleur F.

On peut également introduire l'eau prélevée par le conduit 19 dans la colonne de régénération G par le conduit 30.

**Choix de l'amine**

L'absorption est réalisée avec une solution aqueuse contenant au moins une amine.

Selon l'invention, la solution aqueuse d'amine comporte entre 10% et 80 % poids d'amines choisies dans la liste constituée par la monoéthanolamine (MEA), la diéthanolamine, la diméthyléthanolamine, la diisopropylamine, la diglycolamine, la pipérazine, l'hydroxyéthyl piperazine, le 1,3-Bis(diméthylamino)-2-propanol, le 1,3-Bis(méthyléthylamino)-2-propanol, le 1,3-Bis(éthylamino)-2-propanol, le 1,3-Bis(diéthylamino)-2-propanol, le 1,3-bis(méthylamino)-2-propanol, le 1,3 Bis(npropylamino)-2-propanol, le 1,3-Bis(isopropylamino)-2-propanol, le 1,3 Bis(nbutylamino)-2-propanol, le 1,3-Bis(isobutylamino)-2-propanol, le 1,3 Bis(terbutylamino)-2-propanol, le 1,3-Bis[(2-hydroxyéthyl)méthylamino]-2-propanol, le 1,3-Bis(pipéridino)-2-propanol, et le 1,3-Bis(pyrrolidino)-2-propanol.

Selon un mode préféré de réalisation, la solution aqueuse comporte entre 30 % et 50 % poids de monoéthanolamine (MEA).

**Mesure pour réduire la dégradation de l'amine**

Pour réduire la dégradation de l'amine, on introduit au moins un composé inhibiteur de dégradation dans la solution aqueuse.

Selon un mode de réalisation, la solution comporte entre 10% et 99% poids d'amine, entre 1% et 90% poids d'eau et entre 5 ppm et 5% poids de composé inhibiteur de dégradation.

Ce composé inhibiteur de dégradation est

- un dérivé d'un triazole ou d'un tétrazole, comportant au moins un substituant comportant un atome de soufre tel que décrit dans le brevet FR2948578.

Composés de la famille des thiourées (ne relevant pas de l'invention revendiquée) sont décrits dans le brevet FR2953146.

Composés de la famille des dérivés de la pyrimidine ou de la triazine (ne relevant pas de l'invention revendiquée) sont décrits dans le brevet FR2953145.

De préférence, le composé inhibiteur de dégradation répond à l'une des formules générales suivantes :

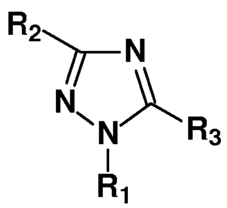
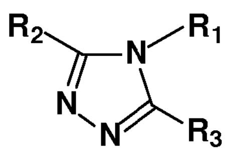
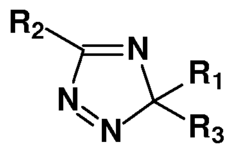

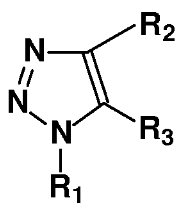
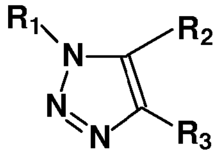
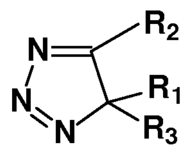

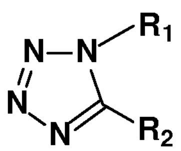
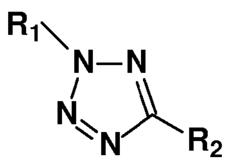
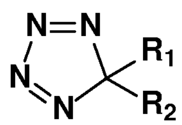

dans laquelle le radical R1 est choisi parmi :

- ◦ un atome d'hydrogène,
- ◦ un radical hydrocarboné comprenant 1 à 12 atomes de carbone,
- o un radical amino de formule générale -NR4R5 dans lequel le radical R4 et le radical R5 sont indépendamment choisis parmi :
  - ◦ un atome d'hydrogène,
  - ◦ un radical hydrocarboné comprenant 1 à 12 atomes de carbone,

et dans laquelle chacun des radicaux R2 et R3 est choisi indépendamment parmi les éléments suivants :

a) -S-X dans lequel le radical X est choisi parmi :

- un atome d'hydrogène,
- un élément alcalin ou alcalino-terreux,
- un métal monovalent ou multivalent,
- un cation ammonium NH4+ ou résultant de la protonation d'une fonction amine,
- un cation phosphonium,
- un radical hydrocarboné comprenant 1 à 12 atomes de carbone,
- un radical choisi parmi un radical thiyl-triazole, thio-triazole, thiyl-tétrazole et thio-tétrazole,

e) un atome d'hydrogène,
f) un radical hydroxyle,
g) un radical amino de formule générale -NR4R5 dans lequel le radical R4 et le radical R5 sont indépendamment choisis parmi :

- un atome d'hydrogène,
- un radical hydrocarboné comprenant 1 à 12 atomes de carbone,

f) un radical comprenant 1 à 12 atomes de carbone.

Dans cette famille, le composé inhibiteur de dégradation est choisi parmi le groupe contenant: le 1H-1,2,4-triazole-3-thiol, un sel du 1H-1,2,4-triazole-3-thiol, le 5-phényl-1H-1,2,4-triazole-3-thiol, un sel du 5-phényl-1H-1,2,4-triazole-3-thiol, le 5-(4-pyridyl)-1H-1,2,4-triazole-3-thiol, un sel du 5-(4-pyridyl)-1H-1,2,4-triazole-3-thiol, le 5-(3-pyridyl)-1H-1,2,4-triazole-3-thiol, un sel du 5-(3-pyridyl)-1H-1,2,4-triazole-3-thiol, le 4-méthyl-4H-1,2,4-triazole-3-thiol, un sel du 4-méthyl-4H-1,2,4-triazole-3-thiol, le 4-méthyl-5-(2-thienyl)-4H-1,2,4-triazole-3-thiol, un sel du 4-méthyl-5-(2-thienyl)-4H-1,2,4-triazole-3-thiol, le 4-méthyl-5-(3-thienylméthyl)-4H-1,2,4-triazole-3-thiol, un sel du 4-méthyl-5-(3-thienylméthyl)-4H-1,2,4-triazole-3-thiol, le 4-cyclohexyl-5-sulfanyl-4H-1,2,4-triazol-3-ol, un sel du 4-cyclohexyl-5-sulfanyl-4H-1,2,4-triazol-3-ol, le 3-amino-1,2,4-triazole-5-thiol, un sel du 3-amino-1,2,4-triazole-5-thiol, le 4-amino-4H-1,2,4-triazole-3,5-dithiol, un sel du 4-amino-4H-1,2,4-triazole-3,5-dithiol, le [1,2,4]triazolo[4,3-a]pyridine-3-thiol, un sel du [1,2,4]triazolo[4,3-a]pyridine-3-thiol, le 1H-5-mercapto-1,2,3-triazole, un sel du 1H-5-mercapto-1,2,3-triazole, le 1-méthyl-1H-tétrazole-5-thiol, un sel du 1-méthyl-1H-tétrazole-5-thiol, le 1-éthyl-1H-tétrazole-5-thiol, un sel du 1-éthyl-1H-tétrazole-5-thiol, le 1-phényl-1H-tétrazole-5-thiol, un sel du 1-phényl-1H-tétrazole-5-thiol, le 1-(4-hydroxyphényl)-1H-tétrazole-5-thiol, un sel du 1-(4-hydroxyphényl)-1H-tétrazole-5-thiol, l'acide 5-mercapto-1-tétrazoleacétique, un sel de l'acide 5-mercapto-1-tétrazoleacétique, le 1-[2-(diméthylamino)éthyl]-1H-tétrazole-5-thiol, un sel du 1-[2-(diméthylamino)éthyl]-1H-tétrazole-5-thiol, le 3-Amino-5-methylthio-1H-1,2,4-triazole, un sel du 3-Amino-5-methylthio-1H-1,2,4-triazole, le 5-(méthylthio)-1H-tétrazole, un sel du 5-(méthylthio)-1H-tétrazole, le 5-(éthylthio)-1H-tétrazole, un sel du 5-(éthylthio)-1H-tétrazole, le 1-méthyl-5-(méthylthio)-1H-tétrazole, un sel du 1-méthyl-5-(méthylthio)-1H-tétrazole, le 4-phényl-4H-1,2,4-triazole-3-thiol, un sel du 4-phényl-4H-1,2,4-triazole-3-thiol, le 5-méthyl-4H-1,2,4-triazole-3-thiol, un sel du 5-méthyl-4H-1,2,4-triazole-3-thiol, la 5-(trifluorométhyl)-2,4-dihydro-3H-1,2,4-triazole-3-thione, un sel de la 5-(trifluorométhyl)-2,4-dihydro-3H-1,2,4-triazole-3-thione, le 4-isopropyl-4H-1,2,4-triazole-3-thiol et un sel du 4-isopropyl-4H-1,2,4-triazole-3-thiol.

Les composés de la famille des dérivés de la pyrimidine ou de la triazine (ne relevant pas de l'invention revendiquée) tel que décrit dans le brevet FR2953145 répondent à l'une des formules générales suivantes :

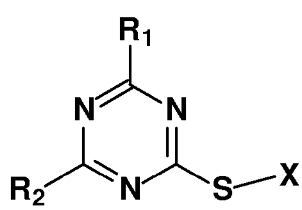

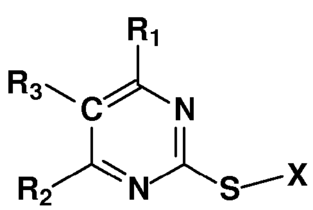

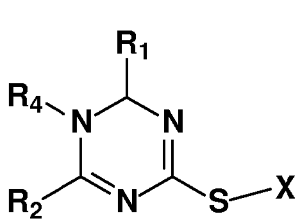

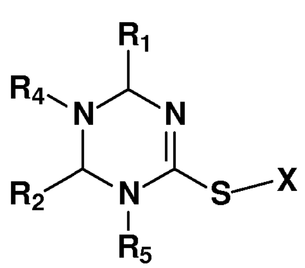

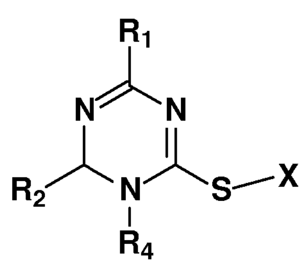

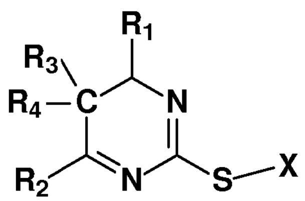

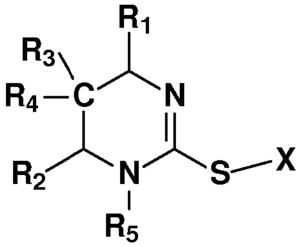

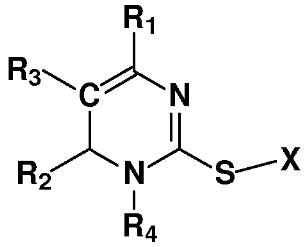

dans lesquelles X est choisi parmi

- ◦ un atome d'hydrogène,
- ◦ un élément alcalin ou alcalino-terreux,
- ◦ un métal monovalent ou multivalent,
- ◦ un cation ammonium $NH_4^+$ ou résultant de la protonation d'une fonction amine,
- ◦ un cation phosphonium,

dans lesquelles chacun des radicaux R1, R2 et R3 est choisi indépendamment parmi

- ◦ un atome d'hydrogène,
- ◦ un radical hydrocarboné comprenant 1 à 12 atomes de carbone,
- o un radical

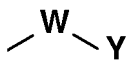

dans lequel W est choisi parmi un atome de soufre et un atome d'oxygène et Y est choisi parmi :

- o un atome d'hydrogène,
- o un radical hydrocarboné comprenant de 1 à 12 atomes de carbone,
- o un élément alcalin ou alcalino-terreux,
- o un métal monovalent ou multivalent,
- o un cation ammonium $NH_4^+$ ou résultant de la protonation d'une fonction amine,
- o un cation phosphonium,

et dans lesquelles chacun des radicaux R4 et R5 est choisi indépendamment parmi :

- ◦ un atome d'hydrogène,
- ◦ un radical hydrocarboné comprenant de 1 à 12 atomes de carbone.

Dans cette famille, le composé inhibiteur de dégradation peut être choisi parmi le groupe contenant : le 2-thiouracil (ou 4-hydroxy-2-mercaptopyrimidine), un sel du 2-thiouracil (ou 4-hydroxy-2-mercaptopyrimidine), le 4-thiouracil (ou 2-hydroxy-4-mercaptopyrimidine), un sel du 4-thiouracil (ou 2-hydroxy-4-mercaptopyrimidine), l'acide 2-thiobarbirurique (ou 4,6-dihydroxypyrimidine-2-thiol), un sel de l'acide 2-thiobarbirurique (ou 4,6-dihydroxypyrimidine-2-thiol), la 2-mercaptopyrimidine, un sel de la 2-mercaptopyrimidine, le 3,4,5,6-tétrahydropyrimidine-2-thiol, un sel du 3,4,5,6-tétrahydropyrimidine-2-thiol, le 4,5-dihydro-4,4,6-triméthyl-2-pyrimidinethiol, un sel du 4,5-dihydro-4,4,6-triméthyl-2-pyrimidinethiol, la 4-hydroxy-2-mercapto-6-méthylpyrimidine, un sel de la 4-hydroxy-2-mercapto-6-méthylpyrimidine, la 2-mercapto-4-méthylpyrimidine, un sel de la 2-mercapto-4-méthylpyrimidine, le 1,3,5-triazine-2,4,6-trithiol, un sel du 1,3,5-triazine-2,4,6-trithiol, et la 4-méthyl-2-(méthylthio)pyrimidine.

Les composés de la famille des thiourées (ne relevant pas de l'invention revendiquée) tel que décrit dans le brevet 5996 FR2953146 répondent à l'une des formules générales suivantes :

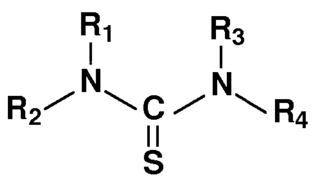

dans laquelle chacun des radicaux R1, R2, R3 et R4 est indifféremment choisi parmi :

- un atome d'hydrogène,
- un radical hydrocarboné comportant de 1 à 8 atomes de carbone,
- un radical aromatique ou hétérocyclique de 5 à 8 atomes de carbone,
- un radical hydroxyalkyle comprenant de 1 à 8 atomes de carbone,
- un radical alcoxy-alkyle, la fonction alcoxy comportant de 1 à 8 atomes de carbone, la fonction des alkyles comportant de 1 à 8 atomes de carbone,
- un radical ceto-alkyle comportant 1 à 8 atomes de carbone
- un radical répondant à la formule générale :

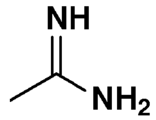

- un radical répondant à la formule générale :

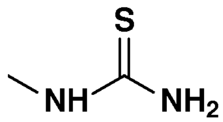

- un radical répondant à la formule générale :

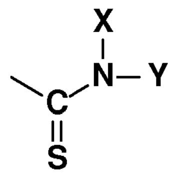

- un radical répondant à la formule générale :

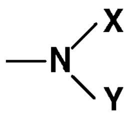

dans laquelle chacun des radicaux X et Y est choisi indifféremment parmi :

- un atome d'hydrogène,
- un radical hydrocarboné comportant de 1 à 8 atomes de carbone,
- un radical aromatique ou hétérocyclique comportant de 5 à 8 atomes de carbone,

Dans cette famille, le composé inhibiteur de dégradation peut être choisi parmi le groupe contenant : la thiourée, la N-méthylthiourée, la N-éthylthiourée, la N-propylthiourée, la N-allylthiourée, la N-butylthiourée, la N-phénylthiourée, la N-benzylthiourée, la N,N'-diméthylthiourée, la N,N'-diéthylthiourée, la N,N'-diisopropylthiourée, la N-N'-dibutylthiourée, la N-N'-ditertiobutylthiourée, la N,N'-diallylthiourée, la N,N'-dihexylthiourée, la N,N'-dicyclohexylthiourée, la N,N'-diheptylthiourée, la N,N'-dioctylthiourée, la N,N'-di-3-pyridylthiourée, la N,N'-dicyanovinylthiourée, la N,N'-difurfurylthiourée, le 1,1'-thiocarbonyldiimidazole, le morpholine-4-carbothioamide, l'acétylthiourée, le 2-imino-4-thiobiuret, le dithiobiuret, la 2,5-dithiobiurée, la N,N,N',N'-tétraméthylthiourée, le thiocarbohydrazide, le thiosemicarbazide, le 4-méthylthiosemicarbazide, le 4-éhylthiosemicarbazide, le 2-thiohydantoine, l'éthylènethiourée (ou 2-imidazolidinethione), le 1-méthyl-2-imidazolidinethione et le 1,3-diméthyl-imidazolidine-2-thione.

**Mesure pour réduire la corrosion des équipements**

Les inventeurs ont mis en évidence que le choix d'un matériau résistant à la corrosion dans le cadre d'un tel

procédé, ne pouvait se faire sur des critères habituels. En effet, les inventeurs ont mis en évidence que la résistance à la corrosion d'un acier inoxydable pouvait être impactée par la présence d'additifs anti-dégradation tels que ceux mentionnés précédemment.

Les exemples suivants illustrent cette dépendance.

Exemple 1 - Dégradation et corrosion en absence d'additif (ne relevant pas de l'invention revendiquée)

Dans cet exemple, nous reprenons une solution telle que présentée dans le brevet FR2938453, pour deux concentrations en MEA (30% et 40% poids) sans additifs anti-dégradation ni additif anti-corrosion.

Ces solvants ont été testés sur une installation de traitement de gaz construite intégralement en acier inoxydable austénitique de type AISI 316L. L'installation comprend par ailleurs des dispositifs permettant d'insérer des coupons de corrosion dans la solution d'amine, à différentes positions stratégiques de l'installation. La résistance à la corrosion de différentes nuances d'acier a ainsi pu être testée.

Dans une solution de MEA à 30% poids et dans les conditions normales de fonctionnement de l'unité, la dégradation de l'amine s'est produite à une vitesse de l'ordre de 1.5 kg de MEA par tonne de CO2 capté. Lorsque la concentration en amine a été portée à 40% poids, la vitesse de dégradation de l'amine a été multipliée par deux, pour atteindre 3 kg de MEA par tonne de CO2. Cette vitesse de dégradation est très élevée, et pénalise grandement l'opérabilité du procédé, ainsi que son coût opératoire.

Par ailleurs, dans les zones les plus chaudes du procédé, la vitesse de corrosion (épaisseur de corrosion par an) de l'acier inoxydable de type AISI 304L dépasse 0.3 mm/an. Cette vitesse est supérieure aux limites admissibles pour ce type d'acier dans les pratiques de dimensionnement usuelles.

Néanmoins, cet exemple illustre également le grand intérêt de pouvoir utiliser des solutions d'amine à forte concentration. Lors de la campagne de test à 30% poids de MEA, la consommation énergétique a été de 3.3 GJ par tonne de CO2. Le passage à 40% poids de MEA a permis de diminuer cette consommation à 3.0 GJ par tonne de CO2.

Ce premier exemple montre également que l'augmentation de la concentration en amine pour améliorer l'efficacité énergétique de la désacidification, fait apparaître des limites en termes de dégradation et de corrosion, même en utilisant des nuances d'acier inoxydable austénitique de type 304L ou 316L.

Ce premier exemple illustre donc bien que :

- d'une part il est intéressant de pouvoir opérer les procédés de désacidification avec des fortes teneurs en amine, afin de diminuer la consommation énergétique du procédé,
- d'autre part l'utilisation de solvant concentrés en amine augmente la vitesse de dégradation de l'amine, rendant nécessaire l'utilisation d'additifs anti-dégradation efficaces,
- enfin que l'augmentation de la teneur en amine dans le solvant conduit également à une augmentation de la corrosivité vis-à-vis des aciers.

Exemple 2 - Dégradation et corrosion de l'acier 316L en présence d'additif - MEA 40% (ne relevant pas de l'invention revendiquée)

Dans cet exemple, nous avons évalué la résistance à la corrosion des aciers inoxydables de type AISI 304L et AISI 316L dans des solutions de MEA à 40% poids contenant différents additifs anti-dégradation.

Le tableau 1 présente les vitesses de corrosion de coupons en acier inoxydable après immersion dans une solution de MEA à 40% poids chargée en CO2 (taux de charge de l'ordre de 0.45 mol de CO2 par mol de MEA) à 80°C, avec différents additifs. Les additifs A1, A2 et A3 appartiennent au groupe suivant : 2,5-dimercapto-1,3,4-thiadiazole ; N,N'-diéthylthiourée ; 2,4,6-trithiol-1,3,5-triazine.

*Tableau 1*

| Additif anti-dégradation | Vitesse de corrosion de l'acier 304L | Vitesse de corrosion de l'acier 316L |
|---|---|---|
| sans additif | < 10 μm/an | < 10 μm/an |
| A1 | 190 μm/an | 45 μm/an |
| A2 | > 300 μm/an | > 300 μm/an |
| A3 | 465 μm/an | 117 μm/an |

Le tableau 2 présente les vitesses de corrosion de coupons en acier inoxydable après immersion dans une solution de MEA à 40% poids modérément chargée en CO2 (taux de charge de l'ordre de 0.2 mole de CO2 par mole

de MEA) à 115°C, avec différents additifs anti-dégradation parmi les plus performants disponibles, à la concentration de 0.25% massique. Les additifs A4 et A5 appartiennent au groupe suivant : 3-mercapto-4-méthyl-1,2,4-triazole ; 5-mercapto-1-méthyltetrazole.

*Tableau 2*

| Additif anti-dégradation | Vitesse de corrosion de l'acier 316L |
|---|---|
| sans additif | 25 μm/an |
| A4 | 125 μm/an |
| A5 | 150 μm/an |

Pour tous ces additifs, des tests d'efficacité du pouvoir anti-dégradation ont été réalisés indépendamment, en présence d'une grande quantité d'oxygène et dans des réacteurs inertes (verre). Dans tous les cas, une dégradation inférieure au seuil de détection a été mesurée en présence d'additifs, alors qu'une dégradation considérable a été mesurée dans les mêmes conditions sans additifs.

Nous constatons à travers cet exemple que les additifs anti-dégradation conduisent à une augmentation élevée ou très élevée de la corrosion des nuances d'acier inoxydable usuelles de type AISI 304L ou AISI 316L. Cet effet constitue un élément inattendu, dans la mesure où certain de ces additifs sont connus pour être employés comme inhibiteurs de corrosion [Shen, Corrosion Science 2006 ; Lin, JAE 1999 / Quraishi JAE 2002].

Ce second exemple illustre donc très clairement la difficulté de concilier une vitesse de corrosion modérée avec une faible dégradation, ainsi que le caractère inattendu des risques de corrosion rencontrés en présence de ces additifs.

Exemple 3 - Corrosion de différentes nuances en présence d'additif - MEA 40% (ne relevant pas de l'invention revendiquée, sauf pour les nuances d'acier 1.4462, 1.4410 et 1.4547

Dans les exemples précédents, nous avons constaté que les meilleurs additifs anti-dégradation conduisaient à une augmentation sensible des vitesses de corrosion des nuances d'acier inoxydables classiques AISI 304L ou AISI 316L. Nous avons donc recherché si d'autres nuances d'alliage métallique pouvaient présenter une meilleure résistance à la corrosion.

Pour classer la résistance à la corrosion des alliages d'acier inoxydables, un critère bien connu de l'homme de l'art est le Pitting Resistance Equivalent Number (PREN), qui est calculé à partir de la composition chimique de l'alliage en chrome (Cr), molybdène (Mo) et azote (N) selon la formule suivante, où les concentrations sont exprimées en % massique :

$$PREN = Cr + 3.3\ Mo + 16\ N$$

Il est généralement admis que la résistance à la corrosion des alliages inoxydables augmente avec la valeur du PREN. En suivant cette démarche, nous avons donc sélectionné différentes nuances d'aciers inoxydables susceptibles de remplacer les nuances AISI 304L et AISI 316L.

L'ensemble des nuances d'acier inoxydables sélectionnées est présenté dans le tableau 3.

Chaque nuance est désignée par un code numérique selon la norme EN 10027-2. Nous faisons figurer également dans le tableau la désignation usuelle plus classique. Pour chaque nuance, nous présentons dans le tableau la composition chimique typique selon la norme EN 10088. Nous faisons donc figurer les valeurs minimale et maximale du PREN pour chaque nuance, en fonction des tolérances de composition de la norme. Enfin, nous indiquons pour chaque nuance la valeur réelle du PREN correspondant à la composition de l'échantillon que nous avons testé dans nos essais de corrosion. Les différentes nuances sont ainsi classées par ordre croissant de PREN, devant en principe correspondre à un niveau croissant de résistance à la corrosion.

*Tableau 3*

| Désignation de l'acier | C | Cr | Ni | Mo | N | Fe | PREN | |
|---|---|---|---|---|---|---|---|---|
| | | | | | | | Norme | exp. |
| 1.4404/316L | < 0.03 | 16.5-18.5 | 11-14 | 2-2.5 | / | bal. | 23 - 27 | 24 |

(suite)

| Désignation de l'acier | C | Cr | Ni | Mo | N | Fe | PREN | |
|---|---|---|---|---|---|---|---|---|
| | | | | | | | Norme | exp. |
| 1.4362 / 2304 | < 0.030 | 22-24 | 3.5-5.5 | 0.1-0.6 | 0.05-0.2 | bal. | 23 - 29 | 26 |
| 1.4462 / 2205 | < 0.03 | 21-23 | 4.5-6.5 | 2.5-3.5 | 0.1-0.22 | bal. | 31 - 38 | 33 |
| 1.4466 / 25-22-2 | < 0.02 | 24-26 | 21-23 | 2-2.5 | 0.1-0.16 | bal. | 32 - 37 | 34 |
| 1.4539 / 904L | < 0.02 | 19-21 | 24-26 | 4-5 | 0.04-0.15 | bal. | 33 - 40 | 37 |
| 1.4410 / 2507 | < 0.03 | 24-26 | 6-8 | 3-4.5 | 0.24-0.35 | bal. | 37 - 46 | 40 |
| 1.4547 / 254 | < 0.02 | 19.5-20.5 | 17.5-18.5 | 6-7 | 0.18-0.25 | bal. | 42 - 48 | 42 |

Dans un premier essai, nous avons comparé la résistance à la corrosion des aciers 1.4404 (316L) et 1.4362 (2304) dans une solution de MEA 40% à 100°C, chargée en CO2 à un taux de l'ordre de 0.3 à 0.35 mol de CO2 par mol d'amine, et en absence d'additif A4 (condition 1) ou en présence de 0.25 % massique d'additif A4 (condition 2). Les résultats sont comparés dans le tableau 4.

*Tableau 4*

| Vitesse de corrosion | condition 1 (sans additif) | condition 2 (avec additif) | PREN |
|---|---|---|---|
| 1.4404 (316L) | 37 μm/an | 96 μm/an | 24 |
| 1.4362 (2304) | 9 μm/an | 690 μm/an | 26 |

A travers cet essai, nous constatons bien qu'en absence d'additif, la résistance à la corrosion de ces deux nuances est conforme aux attentes telles qu'elles peuvent être formulées par l'homme de l'art. Par contre, en présence d'un additif anti-dégradation, la tendance est totalement inversée, avec une corrosion considérablement plus élevée pour la nuance 1.4362 dont on attendait une meilleure résistance à la corrosion.

D'autres nuances ont été testées dans des conditions d'environnement choisies pour être les plus sévères possibles en termes de corrosion, par rapport aux conditions rencontrées habituellement dans les procédés de désacidification. Ces essais ont été réalisés dans un réacteur sous pression, à 120°C, avec une MEA 40% poids chargée en CO2 avec un taux de charge de 0.4 à 0.5 mol de CO2 par mole d'amine. La solution était par ailleurs vierge de tout additif (condition 1) ou contenait 0.25 % poids d'additif A4 (condition 2).

Les résultats sont comparés dans le tableau 5.

*Tableau 5*

| Vitesse de corrosion | condition 1 (sans additif) | condition 2 (avec additif) | PREN |
|---|---|---|---|
| 1.4404 (316L) | 80 μm/an | 500 μm/an | 24 |
| 1.4462 (2205) | < 35 μm/an | 138 μm/an | 33 |
| 1.4466 (25-22-2) | | 28 μm/an | 34 |
| 1.4539 (904L) | | 265 μm/an | 37 |
| 1.4410 (2507) | | < 10 μm/an | 40 |
| 1.4547 (254) | | < 10 μm/an | 42 |

A travers cet essai, nous constatons à nouveau qu'en présence d'additif anti-dégradation, la résistance à la corrosion de différentes nuances d'acier inoxydable ne suit pas le classement qui pourrait être établi par l'homme de l'art. En particulier, la nuance 1.4539, qui présente un indice PREN de 37, présente une vitesse de corrosion sensiblement plus élevée que les nuances 1.4462 et 1.4466, dont les PREN sont respectivement de 33 et 34.

Ainsi, selon l'invention, on sélectionne l'acier inoxydable parmi un ensemble d'aciers inoxydables. On choisi l'acier ayant une vitesse de corrosion (épaisseur de corrosion par unité de temps) la plus faible, ladite vitesse étant déterminée en présence du composé inhibiteur de dégradation. Comme l'illustre les exemples, il est important que la propriété de résistance à la corrosion soit évaluée en présence de l'additif anti-dégradation de l'amine. On peut utiliser

un acier inoxydable comprenant :

- au plus 0.03% de C,
- au moins 18% et jusqu'à 28% de Cr,
- au moins 2% et jusqu'à 8% de Mo,
- au moins 0.08% et jusqu'à 0.5%de N,
- moins de 31% de Ni,

On peut par exemple utiliser un acier inoxydable de type Duplex ou super duplex.
On peut également, réaliser des sélections en fonction de la température de la solution absorbante en contact avec l'acier inoxydable.
Par exemple, lorsque la température de la solution aqueuse est inférieure à 90°C, des tests on montré qu'il était judicieux d'utiliser un acier inoxydable comprenant :

- au plus 0.03% de C,
- au moins 18% et jusqu'à 28% de Cr,
- au moins 2% et jusqu'à 5% de Mo,
- au moins 0.1% et jusqu'à 0.3%de N,
- moins de 20% de Ni,

En revanche, lorsque la température de la solution aqueuse est supérieure à 90°C, on utilise plutôt un acier inoxydable comprenant :

- au plus 0.03% de C,
- au moins 20% et jusqu'à 28% de Cr,
- au moins 2.5% et jusqu'à 8% de Mo,
- au moins 0.1% et jusqu'à 0.5%de N,
- moins de 31% de Ni,

Une fois l'acier sélectionné, on utilise des équipements dont les surfaces en contact avec la solution aqueuse sont fabriquées avec cet acier inoxydable, de façon à réduire le risque de corrosion de ces surfaces.
Selon un mode de réalisation préférentiel, on utilise

- une solution aqueuse comportant entre 30 % et 50 % poids de monoéthanolamine (MEA), de préférence 40%, et du 3-mercapto-4-méthyl-1,2,4-triazole en tant que composé inhibiteur de dégradation de l'amine.

## Revendications

**1.** Procédé pour absorber des composés acides contenus dans un effluent gazeux, dans lequel on met en contact l'effluent gazeux avec une solution aqueuse comportant au moins une amine et au moins un composé inhibiteur de dégradation de l'amine, **caractérisé en ce que** :

- le composé inhibiteur de dégradation est un dérivé d'un triazole ou d'un tétrazole, comportant au moins un substituant comportant un atome de soufre;
- on sélectionne au préalable un acier inoxydable de norme 1.4462 ou 1.4410 ou 1.4547 résistant à la corrosion lorsqu'il est en contact avec ledit composé inhibiteur de dégradation de l'amine;
- on utilise des équipements dont les surfaces en contact avec ladite solution aqueuse sont fabriquées avec ledit acier inoxydable.

**2.** Procédé selon la revendication 1, dans lequel on sélectionne l'acier inoxydable ayant une vitesse de corrosion la plus faible parmi un ensemble d'aciers inoxydables, ladite vitesse étant déterminée en présence dudit composé inhibiteur de dégradation.

**3.** Procédé selon la revendication 2, dans lequel on sélectionne l'acier inoxydable en fonction de la température de ladite solution aqueuse en contact avec ledit acier inoxydable.

**4.** Procédé selon l'une des revendications précédentes, dans lequel on utilise un acier inoxydable comprenant :

- au plus 0.03% de C,
- au moins 18% et jusqu'à 28% de Cr,
- au moins 2% et jusqu'à 8% de Mo,
- au moins 0.08% et jusqu'à 0.5%de N,
- moins de 31% de Ni,

**5.** Procédé selon la revendication 4, dans lequel on utilise un acier inoxydable de type Duplex ou super duplex.

**6.** Procédé selon la revendication 3, dans lequel on utilise, lorsque la température de ladite solution aqueuse est inférieure à 90°C, un acier inoxydable comprenant :

- au plus 0.03% de C,
- au moins 18% et jusqu'à 28% de Cr,
- au moins 2% et jusqu'à 5% de Mo,
- au moins 0.1% et jusqu'à 0.3%de N,
- moins de 20% de Ni,

**7.** Procédé selon la revendication 3, dans lequel on utilise, lorsque la température de ladite solution aqueuse est supérieure à 90°C, un acier inoxydable comprenant :

- au plus 0.03% de C,
- au moins 20% et jusqu'à 28% de Cr,
- au moins 2.5% et jusqu'à 8% de Mo,
- au moins 0.1% et jusqu'à 0.5%de N,
- moins de 31% de Ni,

**8.** Procédé selon l'une des revendications précédentes, dans lequel la solution aqueuse d'amine comporte entre 10 % et 80 % poids d'amines choisies dans la liste constituée par la monoéthanolamine (MEA), la diéthanolamine, la diméthyléthanolamine, la diisopropylamine, la diglycolamine, la pipérazine, l'hydroxyéthyl piperazine, le 1,3-Bis(diméthylamino)-2-propanol, le 1,3-Bis(méthyléthylamino)-2-propanol, le 1,3-Bis(éthylamino)-2-propanol, le 1,3-Bis(diéthylamino)-2-propanol, le 1,3-bis(méthylamino)-2-propanol, le 1,3 Bis(npropylamino)-2-propanol, le 1,3-Bis(isopropylamino)-2-propanol, le 1,3 Bis(nbutylamino)-2-propanol, le 1,3-Bis(isobutylamino)-2-propanol, le 1,3 Bis(terbutylamino)-2-propanol, le 1,3-Bis[(2-hydroxyéthyl)méthylamino]-2-propanol, le 1,3-Bis(pipéridino)-2-propanol, et le 1,3-Bis(pyrrolidino)-2-propanol.

**9.** Procédé selon la revendication 8, dans lequel la solution aqueuse comporte entre 30 % et 50 % poids de monoéthanolamine (MEA).

**10.** Procédé selon l'une des revendications 1 à 9, dans lequel ledit composé inhibiteur de dégradation répond à l'une des formules générales suivantes :

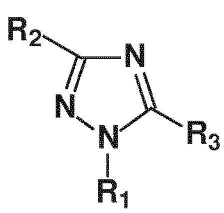
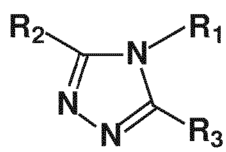
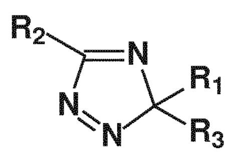

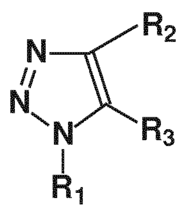
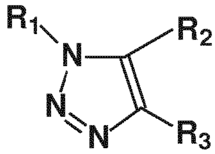
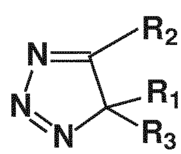

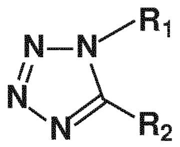 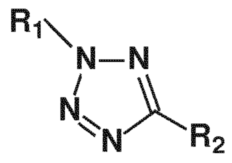 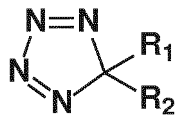

dans laquelle le radical R1 est choisi parmi :

- un atome d'hydrogène,
- un radical hydrocarboné comprenant 1 à 12 atomes de carbone,
- un radical amino de formule générale -NR4R5 dans lequel le radical R4 et le radical R5 sont indépendamment choisis parmi :
  - un atome d'hydrogène,
  - un radical hydrocarboné comprenant 1 à 12 atomes de carbone,

et dans laquelle chacun des radicaux R2 et R3 est choisi indépendamment parmi les éléments suivants :

a) -S-X dans lequel le radical X est choisi parmi :

- un atome d'hydrogène,
- un élément alcalin ou alcalino-terreux,
- un métal monovalent ou multivalent,
- un cation ammonium NH4+ ou résultant de la protonation d'une fonction amine,
- un cation phosphonium,
- un radical hydrocarboné comprenant 1 à 12 atomes de carbone,
- un radical choisi parmi un radical thiyl-triazole, thio-triazole, thiyl-tétrazole et thio-tétrazole,

b) un atome d'hydrogène,
c) un radical hydroxyle,
d) un radical amino de formule générale -NR4R5 dans lequel le radical R4 et le radical R5 sont indépendamment choisis parmi :

- un atome d'hydrogène,
- un radical hydrocarboné comprenant 1 à 12 atomes de carbone,

e) un radical comprenant 1 à 12 atomes de carbone.

**11.** Procédé selon la revendication 10, dans lequel le composé inhibiteur de dégradation est choisi parmi le groupe contenant : le 1H-1,2,4-triazole-3-thiol, un sel du 1H-1,2,4-triazole-3-thiol, le 5-phényl-1H-1,2,4-triazole-3-thiol, un sel du 5-phényl-1H-1,2,4-triazole-3-thiol, le 5-(4-pyridyl)-1H-1,2,4-triazole-3-thiol, un sel du 5-(4-pyridyl)-1H-1,2,4-triazole-3-thiol, le 5-(3-pyridyl)-1H-1,2,4-triazole-3-thiol, un sel du 5-(3-pyridyl)-1H-1,2,4-triazole-3-thiol, le 4-méthyl-4H-1,2,4-triazole-3-thiol, un sel du 4-méthyl-4H-1,2,4-triazole-3-thiol, le 4-méthyl-5-(2-thienyl)-4H-1,2,4-triazole-3-thiol, un sel du 4-méthyl-5-(2-thienyl)-4H-1,2,4-triazole-3-thiol, le 4-méthyl-5-(3-thienylméthyl)-4H-1,2,4-triazole-3-thiol, un sel du 4-méthyl-5-(3-thienylméthyl)-4H-1,2,4-triazole-3-thiol, le 4-cyclohexyl-5-sulfanyl-4H-1,2,4-triazol-3-ol, un sel du 4-cyclohexyl-5-sulfanyl-4H-1,2,4-triazol-3-ol, le 3-amino-1,2,4-triazole-5-thiol, un sel du 3-amino-1,2,4-triazole-5-thiol, le 4-amino-4H-1,2,4-triazole-3,5-dithiol, un sel du 4-amino-4H-1,2,4-triazole-3,5-dithiol, le [1,2,4]triazolo[4,3-a]pyridine-3-thiol, un sel du [1,2,4]triazolo[4,3-a]pyridine-3-thiol, le 1H-5-mercapto-1,2,3-triazole, un sel du 1H-5-mercapto-1,2,3-triazole, le 1-méthyl-1H-tétrazole-5-thiol, un sel du 1-méthyl-1H-tétrazole-5-thiol, le 1-éthyl-1H-tétrazole-5-thiol, un sel du 1-éthyl-1H-tétrazole-5-thiol, le 1-phényl-1H-tétrazole-5-thiol, un sel du 1-phényl-1H-tétrazole-5-thiol, le 1-(4-hydroxyphényl)-1H-tétrazole-5-thiol, un sel du 1-(4-hydroxyphényl)-1H-tétrazole-5-thiol, l'acide 5-mercapto-1-tétrazoleacétique, un sel de l'acide 5-mercapto-1-tétrazoleacétique, le 1-[2-(diméthylamino)éthyl]-1H-tétrazole-5-thiol, un sel du 1-[2-(diméthylamino)éthyl]-1H-tétrazole-5-thiol, le 3-Amino-5-methylthio-1H-1,2,4-triazole, un sel du 3-Amino-5-methylthio-1H-1,2,4-triazole, le 5-(méthylthio)-1H-tétrazole, un sel du 5-(méthylthio)-1H-tétrazole, le 5-(éthylthio)-1H-tétrazole, un sel du 5-(éthylthio)-1H-tétrazole, le 1-méthyl-5-(méthylthio)-1H-tétrazole, un sel du 1-méthyl-5-(méthylthio)-1H-tétrazole, le 4-phényl-4H-1,2,4-triazole-3-thiol, un sel du 4-phényl-4H-1,2,4-triazole-3-thiol, le 5-méthyl-4H-1,2,4-triazole-3-thiol, un sel du 5-méthyl-4H-1,2,4-triazole-3-thiol, la

5-(trifluorométhyl)-2,4-dihydro-3H-1,2,4-triazole-3-thione, un sel de la 5-(trifluorométhyl)-2,4-dihydro-3H-1,2,4-triazole-3-thione, le 4-isopropyl-4H-1,2,4-triazole-3-thiol et un sel du 4-isopropyl-4H-1,2,4-triazole-3-thiol.

**12.** Procédé selon l'une des revendications précédentes, dans lequel les composés acides appartiennent à un groupe comportant le $CO_2$ et l'$H_2S$.

**13.** Procédé selon l'une des revendications précédentes, dans lequel le procédé est mis en œuvre pour absorber des composés acides contenus dans l'un des effluents du groupe contenant le gaz naturel, les fumées de combustion, les gaz de synthèse, les gaz de raffinerie, les gaz obtenus en queue du procédé Claus, les gaz de fermentation de biomasse, les gaz de cimenterie et les fumées d'incinérateur.

**Patentansprüche**

**1.** Verfahren zur Absorption von in einem Abgas enthaltenen sauren Verbindungen, wobei das Abgas mit einer wässrigen Lösung in Kontakt gebracht wird, die mindestens ein Amin und mindestens eine einen Aminabbau hemmende Verbindung umfasst, **dadurch gekennzeichnet, dass**:

- es sich bei der abbauhemmenden Verbindung um ein Triazol- oder Tetrazolderivat handelt, das mindestens einen ein Schwefelatom umfassenden Substituenten umfasst;
- zuvor ein Edelstahl der Norm 1.4462 oder 1.4410 oder 1.4547 ausgewählt wird, der korrosionsbeständig ist, wenn er sich in Kontakt mit der einen Aminabbau hemmenden Verbindung befindet;
- Apparate verwendet werden, deren Flächen in Kontakt mit der wässrigen Lösung mit dem Edelstahl hergestellt sind.

**2.** Verfahren nach Anspruch 1, wobei der Edelstahl mit der niedrigsten Korrosionsbeständigkeit aus einer Gesamtheit von Edelstählen ausgewählt wird, wobei die Geschwindigkeit in Anwesenheit der abbauhemmenden Verbindung bestimmt wird.

**3.** Verfahren nach Anspruch 2, wobei der Edelstahl in Abhängigkeit von der Temperatur der in Kontakt mit dem Edelstahl befindlichen wässrigen Lösung ausgewählt wird.

**4.** Verfahren nach einem der vorhergehenden Ansprüche, wobei ein Edelstahl verwendet wird, der Folgendes umfasst:

- höchstens 0,03 % C,
- mindestens 18 % und bis 28 % Cr,
- mindestens 2 % und bis 8 % Mo,
- mindestens 0,08 % und bis 0,5 % N,
- mindestens 31 % Ni.

**5.** Verfahren nach Anspruch 4, wobei ein Edelstahl vom Duplex- oder Superduplex-Typ verwendet wird.

**6.** Verfahren nach Anspruch 3, wobei, wenn die Temperatur der wässrigen Lösung weniger als 90 °C beträgt, ein Edelstahl verwendet wird, der Folgendes umfasst:

- höchstens 0,03 % C,
- mindestens 18 % und bis 28 % Cr,
- mindestens 2 % und bis 5 % Mo,
- mindestens 0,1 % und bis 0,3 % N,
- mindestens 20 % Ni.

**7.** Verfahren nach Anspruch 3, wobei, wenn die Temperatur der wässrigen Lösung mehr als 90 °C beträgt, ein Edelstahl verwendet wird, der Folgendes umfasst:

- höchstens 0,03 % C,
- mindestens 20 % und bis 28 % Cr,
- mindestens 2,5 % und bis 8 % Mo,
- mindestens 0,1 % und bis 0,5 % N,

- mindestens 31 % Ni.

8. Verfahren nach einem der vorhergehenden Ansprüche, wobei die wässrige Aminlösung zwischen 10 Gew.-% und 80 Gew.-% Amine umfasst, die ausgewählt sind aus der Liste bestehend aus Monoethanolamin (MEA), Diethanolamin, Dimethylethanolamin, Diisopropylamin, Diglycolamin, Piperazin, Hydroxyethylpiperazin, 1,3-Bis(dimethylamino)-2-propanol, 1,3-Bis(methylethylamino)-2-propanol, 1,3-Bis(ethylamino)-2-propanol, 1,3-Bis(diethylamino)-2-propanol, 1,3-Bis(methylamino)-2-propanol, 1,3-Bis(n-propylamino)-2-propanol, 1,3-Bis(isopropylamino)-2-propanol, 1,3-Bis(n-butylamino)-2-propanol, 1,3-Bis(isobutylamino)-2-propanol, 1,3-Bis(tert-butylamino)-2-propanol, 1,3-Bis[(2-hydroxyethyl)methylamino]-2-propanol, 1,3-Bis(piperidino)-2-propanol und 1,3-Bis(pyrrolidino)-2-propanol.

9. Verfahren nach Anspruch 8, wobei die wässrige Lösung zwischen 30 Gew.-% und 50 Gew.-% Monoethanolamin (MEA) umfasst.

10. Verfahren nach einem der Ansprüche 1 bis 9, wobei die abbauhemmende Verbindung einer der folgenden allgemeinen Formeln entspricht:

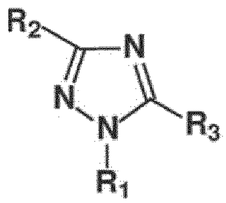 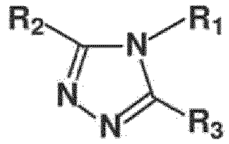 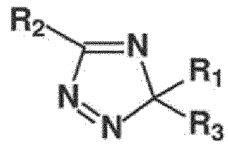

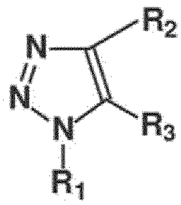 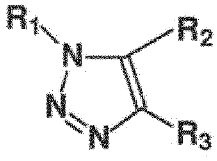 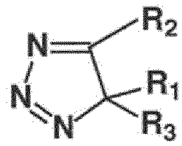

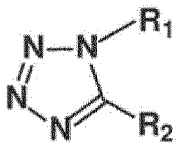 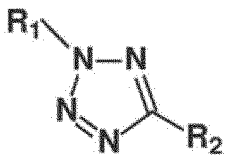 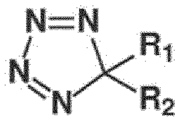

,

in denen der Rest R1 ausgewählt ist aus:

o einem Wasserstoffatom,
o einem Kohlenwasserstoffrest, der 1 bis 12 Kohlenstoffatome umfasst,
o einem Aminorest der allgemeinen Formel -NR4R5, wobei der Rest R4 und der Rest R5 unabhängig ausgewählt sind aus:

o einem Wasserstoffatom,
o einem Kohlenwasserstoffrest, der 1 bis 12 Kohlenstoffatome umfasst,

und wobei jeder der Reste R2 und R3 unabhängig aus den folgenden Elementen ausgewählt ist:

a) -S-X, wobei der Rest X ausgewählt ist aus:

o einem Wasserstoffatom,
o einem Alkali- oder Erdalkalielement,
o einem einwertigen oder mehrwertigen Metall,
o einem Ammonium-, NH4+-, oder einem Kation, das aus der Protonierung einer Aminfunktion resultiert,
o einem Phosphoniumkation,

o einem Kohlenwasserstoffrest, der 1 bis 12 Kohlenstoffatome umfasst,
o einem Rest, der aus einem Thiyltriazol-, Thiotriazol-, Thiyltetrazol- und Thiotetrazolrest ausgewählt ist,

b) einem Wasserstoffatom,
c) einem Hydroxylrest,
d) einem Aminorest der allgemeinen Formel -NR4R5, wobei der Rest R4 und der Rest R5 unabhängig ausgewählt sind aus:

o einem Wasserstoffatom,
o einem Kohlenwasserstoffrest, der 1 bis 12 Kohlenstoffatome umfasst,

e) einem Rest, der 1 bis 12 Kohlenstoffatome umfasst.

**11.** Verfahren nach Anspruch 10, wobei die abbauhemmende Verbindung ausgewählt ist aus der Gruppe, die Folgendes enthält: 1H-1,2,4-Triazol-3-thiol, ein Salz von 1H-1,2,4-Triazol-3-thiol, 5-Phenyl-1H-1,2,4-triazol-3-thiol, ein Salz von 5-Phenyl-1H-1,2,4-triazol-3-thiol, 5-(4-Pyridyl)-1H-1,2,4-triazol-3-thiol, ein Salz von 5-(4-Pyridyl)-1H-1,2,4-triazol-3-thiol, 5-(3-Pyridyl)-1H-1,2,4-triazol-3-thiol, ein Salz von 5-(3-Pyridyl)-1H-1,2,4-triazol-3-thiol, 4-Methyl-4H-1,2,4-triazol-3-thiol, ein Salz von 4-Methyl-4H-1,2,4-triazol-3-thiol, 4-Methyl-5-(2-thienyl)-4H-1,2,4-triazol-3-thiol, ein Salz von 4-Methyl-5-(2-thienyl)-4H-1,2,4-triazol-3-thiol, 4-Methyl-5-(3-thienylmethyl)-4H-1,2,4-triazol-3-thiol, ein Salz von 4-Methyl-5-(3-thienylmethyl)-4H-1,2,4-triazol-3-thiol, 4-Cyclohexyl-5-sulfanyl-4H-1,2,4-triazol-3-ol, ein Salz von 4-Cyclohexyl-5-sulfanyl-4H-1,2,4-triazol-3-ol, 3-Amino-1,2,4-triazol-5-thiol, ein Salz von 3-Amino-1,2,4-triazol-5-thiol, 4-Amino-4H-1,2,4-triazol-3,5-dithiol, ein Salz von 4-Amino-4H-1,2,4-triazol-3,5-dithiol, [1,2,4]Triazolo[4,3-a]pyridin-3-thiol, ein Salz von [1,2,4]Triazolo[4,3-a]pyridin-3-thiol, 1H-5-Mercapto-1,2,3-triazol, ein Salz von 1H-5-Mercapto-1,2,3-triazol, 1-Methyl-1H-tetrazol-5-thiol, ein Salz von 1-Methyl-1H-tetrazol-5-thiol, 1-Ethyl-1H-tetrazol-5-thiol, ein Salz von 1-Ethyl-1H-tetrazol-5-thiol, 1-Phenyl-1H-tetrazol-5-thiol, ein Salz von 1-Phenyl-1H-tetrazol-5-thiol, 1-(4-Hydroxyphenyl)-1H-tetrazol-5-thiol, ein Salz von 1-(4-Hydroxyphenyl)-1H-tetrazol-5-thiol, 5-Mercapto-1-tetrazolessigsäure, ein Salz von 5-Mercapto-1-tetrazolessigsäure, 1-[2-(Dimethylamino)ethyl]-1H-tetrazol-5-thiol, ein Salz von 1-[2-(Dimethylamino)ethyl]-1H-tetrazol-5-thiol, 3-Amino-5-methylthio-1H-1,2,4-triazol, ein Salz von 3-Amino-5-methylthio-1H-1,2,4-triazol, 5-(Methylthio)-1H-tetrazol, ein Salz von 5-(Methylthio)-1H-tetrazol, 5-(Ethylthio)-1H-tetrazol, ein Salz von 5-(Ethylthio)-1H-tetrazol, 1-Methyl-5-(methylthio)-1H-tetrazol, ein Salz von 1-Methyl-5-(methylthio)-1H-tetrazol, 4-Phenyl-4H-1,2,4-triazol-3-thiol, ein Salz von 4-Phenyl-4H-1,2,4-triazol-3-thiol, 5-Methyl-4H-1,2,4-triazol-3-thiol, ein Salz von 5-Methyl-4H-1,2,4-triazol-3-thiol, 5-(Trifluormethyl)-2,4-dihydro-3H-1,2,4-triazol-3-thion, ein Salz von 5-(Trifluormethyl)-2,4-dihydro-3H-1,2,4-triazol-3-thion, 4-Isopropyl-4H-1,2,4-triazol-3-thiol und ein Salz von 4-Isopropyl-4H-1,2,4-triazol-3-thiol.

**12.** Verfahren nach einem der vorhergehenden Ansprüche, wobei die sauren Verbindungen zu einer $CO_2$ und $H_2S$ umfassenden Gruppe gehören.

**13.** Verfahren nach einem der vorhergehenden Ansprüche, wobei das Verfahren verwendet wird, um saure Verbindungen zu absorbieren, die in einem der Abgase der Gruppe enthalten sind, die Erdgas, Rauchgase, Synthesegase, Raffineriegase, Abgase aus dem Claus-Verfahren, Gase aus der Fermentation von Biomasse, Gase von Zementwerken und Abgase von Verbrennungsanlagen enthält.

## Claims

**1.** Process for absorbing acid compounds contained in a gaseous effluent, in which the gaseous effluent is brought into contact with an aqueous solution comprising at least one amine and at least one compound for inhibiting the degradation of the amine, **characterized in that**:

- the degradation-inhibiting compound is a triazole or a tetrazole, comprising at least one substituent comprising a sulfur atom;
- a stainless steel of 1.4462 or 1.4410 or 1.4547 grade, which is resistant to corrosion when it is in contact with said amine degradation-inhibiting compound, is selected beforehand;
- equipment is used, the surfaces of which in contact with said aqueous solution are manufactured from said stainless steel.

**2.** Process according to Claim 1, in which the stainless steel having the lowest corrosion rate among a set of stainless

steels is selected, said rate being determined in the presence of said degradation-inhibiting compound.

3. Process according to Claim 2, in which the stainless steel is selected on the basis of the temperature of said aqueous solution in contact with said stainless steel.

4. Process according to one of the preceding claims, in which use is made of a stainless steel comprising:

- at most 0.03% C,
- at least 18% and up to 28% Cr,
- at least 2% and up to 8% Mo,
- at least 0.08% and up to 0.5% N,
- less than 31% Ni.

5. Process according to Claim 4, in which a stainless steel of duplex or super duplex type is used.

6. Process according to Claim 3, in which use is made, when the temperature of said aqueous solution is below 90°C, of a stainless steel comprising:

- at most 0.03% C,
- at least 18% and up to 28% Cr,
- at least 2% and up to 5% Mo,
- at least 0.1% and up to 0.3% N,
- less than 20% Ni.

7. Process according to Claim 3, in which use is made, when the temperature of said aqueous solution is above 90°C, of a stainless steel comprising:

- at most 0.03% C,
- at least 20% and up to 28% Cr,
- at least 2.5% and up to 8% Mo,
- at least 0.1% and up to 0.5% N,
- less than 31% Ni.

8. Process according to one of the preceding claims, in which the aqueous amine solution comprises between 10% and 80% by weight of amines chosen from the list consisting of monoethanolamine (MEA), diethanolamine, dimethylethanolamine, diisopropylamine, diglycolamine, piperazine, hydroxyethylpiperazine, 1,3-bis(dimethylamino)-2-propanol, 1,3-bis(methylethylamino)-2-propanol, 1,3-bis(ethylamino)-2-propanol, 1,3-bis(diethylamino)-2-propanol, 1,3-bis(methylamino)-2-propanol, 1,3-bis(n-propylamino)-2-propanol, 1,3-bis(isopropylamino)-2-propanol, 1,3-bis(n-butylamino)-2-propanol, 1,3-bis(isobutylamino)-2-propanol, 1,3-bis(tert-butylamino)-2-propanol, 1,3-bis[(2-hydroxyethyl)methylamino]-2-propanol, 1,3-bis(piperidino)-2-propanol, and 1,3-bis(pyrrolidino)-2-propanol.

9. Process according to Claim 8, in which the aqueous solution comprises between 30% and 50% by weight of monoethanolamine (MEA).

10. Process according to one of Claims 1 to 9, in which said degradation-inhibiting compound corresponds to one of the following general formulae:

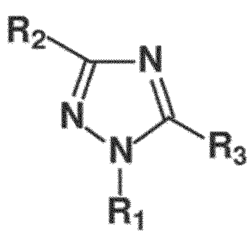
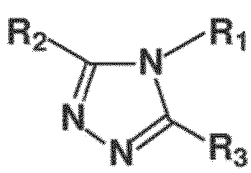
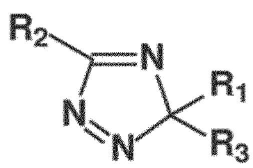

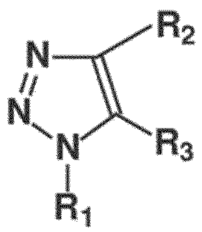
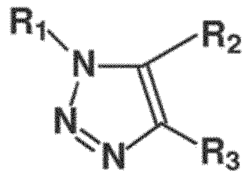
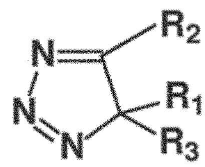

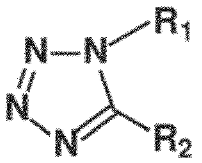
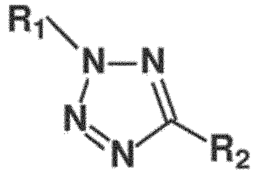
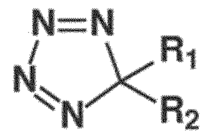

in which the R1 radical is chosen from:

- o a hydrogen atom,
- o a hydrocarbon radical comprising 1 to 12 carbon atoms,
- o an amino radical of general formula -NR4R5 in which the R4 radical and the R5 radical are independently chosen from:
  - o a hydrogen atom,
  - o a hydrocarbon radical comprising 1 to 12 carbon atoms,

and in which each of the R2 and R3 radicals is chosen independently from the following elements:

a) -S-X in which the X radical is chosen from:

- o a hydrogen atom,
- o an alkali or alkaline-earth metal element,
- o a monovalent or multivalent metal,
- o an ammonium cation $NH_4^+$ or a cation resulting from the protonation of an amine function,
- o a phosphonium cation,
- o a hydrocarbon radical comprising 1 to 12 carbon atoms,
- o a radical chosen from a thiyl-triazole, thio-triazole, thiyl-tetrazole and thio-tetrazole radical,

b) a hydrogen atom,
c) a hydroxyl radical,
d) an amino radical of general formula -NR4R5 in which the R4 radical and the R5 radical are independently chosen from:

- o a hydrogen atom,
- o a hydrocarbon radical comprising 1 to 12 carbon atoms,

e) a radical comprising 1 to 12 carbon atoms.

**11.** Process according to Claim 10, in which in the degradation-inhibiting compound is chosen from the group containing: 1H-1,2,4-triazole-3-thiol, a 1H-1,2,4-triazole-3-thiol salt, 5-phenyl-1H-1 ,2,4-triazole-3-thiol, a 5-phenyl-1H-1,2,4-triazole-3-thiol salt, 5-(4-pyridyl)-1H-1,2,4-triazole-3-thiol, a 5-(4-pyridyl)-1H-1,2,4-triazole-3-thiol salt, 5-(3-pyridyl)-1H-1,2,4-triazole-3-thiol, a 5-(3-pyridyl)-1H-1,2,4-triazole-3-thiol salt, 4-methyl-4H-1,2,4-triazole-3-thiol, a 4-methyl-4H-1,2,4-triazole-3-thiol salt, 4-methyl-5-(2-thienyl)-4H-1,2,4-triazole-3-thiol, a 4-methyl-5-(2-thienyl)-4H-1,2,4-triazole-3-thiol salt, 4-methyl-5-(3-thienylmethyl)-4H-1,2,4-triazole-3-thiol, a 4-methyl-5-(3-thienylmethyl)-4H-1,2,4-triazole-3-thiol salt, 4-cyclohexyl-5-sulfanyl-4H-1,2,4-triazole-3-ol, a 4-cyclohexyl-5-sulfanyl-4H-1,2,4-triazole-3-ol salt, 3-amino-1,2,4-triazole-5-thiol, a 3-amino-1,2,4-triazole-5-thiol salt, 4-amino-4H-1,2,4-triazole-3,5-dithiol, a 4-amino-4H-1,2,4-triazole-3,5-dithiol salt, [1,2,4]triazolo[4,3-a]pyridine-3-thiol, a [1,2,4]triazolo[4,3-a]pyridine-3-thiol salt, 1H-5-mercapto-1,2,3-triazole, a 1H-5-mercapto-1,2,3-triazole salt, 1-methyl-1H-tetrazole-5-thiol, a 1-methyl-1H-tetrazole-5-thiol salt, 1-ethyl-1H-tetrazole-5-thiol, a 1-ethyl-1H-tetrazole-5-thiol salt, 1-phenyl-1H-tetrazole-5-thiol, a 1-phenyl-1H-tetrazole-5-thiol salt, 1-(4-hydroxyphenyl)-1H-tetrazole-5-thiol, a 1-(4-hydroxyphenyl)-1H-tetrazole-5-thiol salt, 5-mercapto-1-tetrazolacetic acid, a 5-mercapto-1-tetrazolacetic acid salt, 1-[2-(dimethylamino)ethyl]-1H-tetrazole-5-thiol, a 1-[2-(dimethylamino)ethyl]-1H-tetrazole-5-thiol salt, 3-amino-5-methylthio-1H-1,2,4-triazole, a 3-amino-5-methylthio-1H-1,2,4-triazole salt, 5-(methylthio)-1H-tetrazole, a 5-(methylthio)-1H-tetrazole salt, 5-(ethylthio)-1H-tetrazole, a 5-(ethylthio)-1H-tetrazole salt, 1-methyl-5-(methylthio)-1H-tetrazole, a 1-methyl-5-(methylthio)-1H-tetrazole salt, 4-phenyl-4H-1,2,4-triazole-3-thiol, a 4-phenyl-4H-1,2,4-triazole-3-thiol salt, 5-methyl-4H-1,2,4-triazole-3-thiol, a 5-methyl-4H-1,2,4-triazole-3-thiol salt, 5-(trifluoromethyl)-2,4-dihydro-3H-1,2,4-triazole-3-thione, a 5-(trifluoromethyl)-2,4-dihydro-3H-1,2,4-triazole-3-thione salt, 4-isopropyl-4H-1,2,4-triazole-3-thiol and a 4-isopropyl-4H-1,2,4-triazole-3-thiol salt.

**12.** Process according to one of the preceding claims, in which the acid compounds belong to a group comprising $CO_2$ and $H_2S$.

**13.** Process according to one of the preceding claims, in which the process is used to absorb the acid compounds contained in one of the effluents of the group containing natural gas, combustion flue gases, syngas, refinery gas, Claus process tail gases, biomass fermentation gases, cement plant gases and incinerator flue gases.

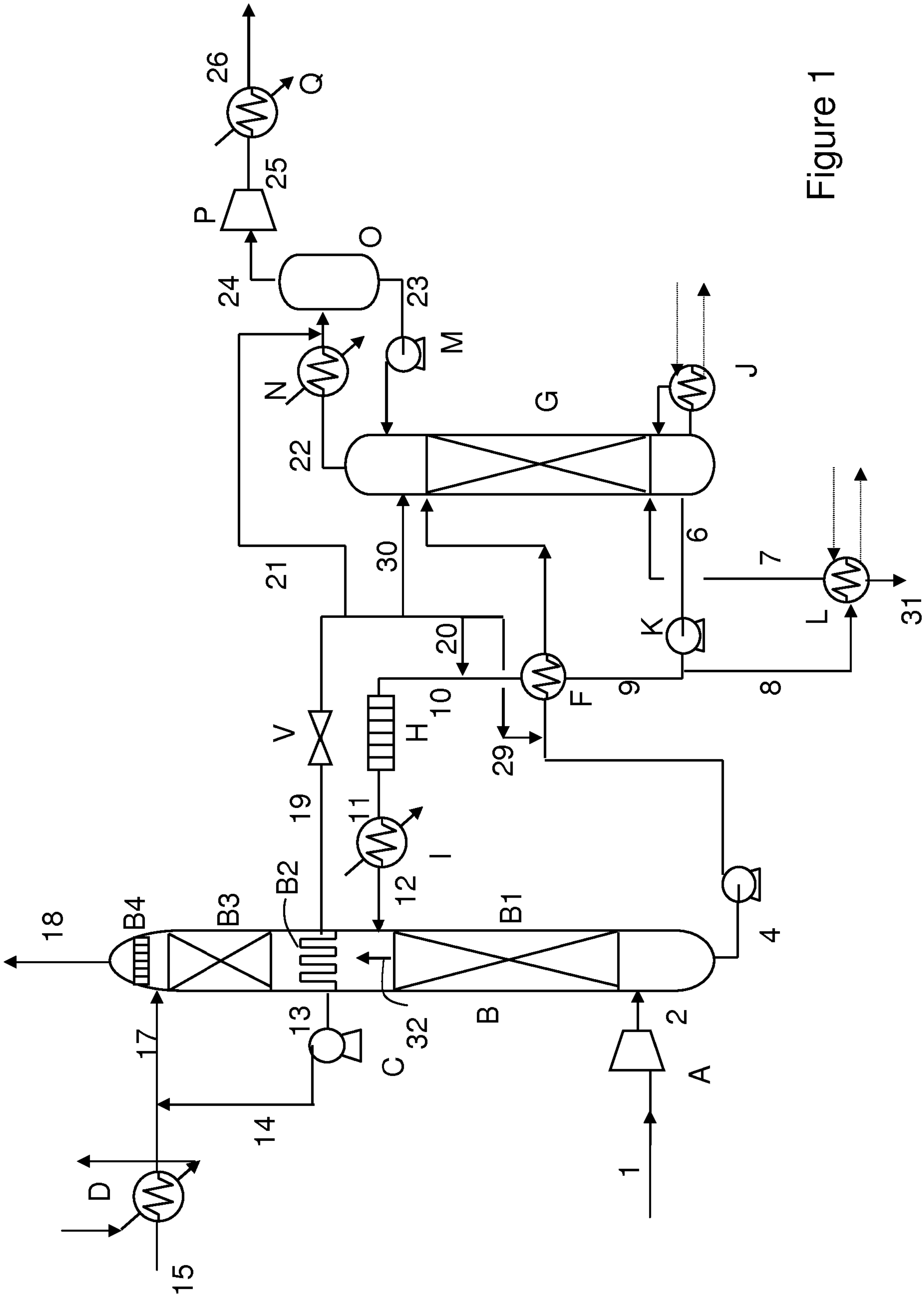

1
2
4
6
7
8
9
10
11
12
13
14
15
17
18
19
20
21
22
23
24
25
26
29
30
31
32
A
B
B1
B2
B3
B4
C
D
F
G
H
I
J
K
L
M
N
O
P
Q
V


Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2820430
- US 7056482 B
- GB 1393302 A
- GB 1360836 A
- US 3959170 A
- EP 0043525 A
- US 4071470 A
- US 4440731 A
- US 4477419 A
- US 4595723 A
- US 4596849 A
- US 4452764 A
- US 4100099 A
- US 4100100 A
- US 4431563 A
- US 20110300044 A
- US 5686016 A
- WO 11064469 A
- WO 11064470 A
- WO 09156618 A
- FR 2938453
- FR 2948578
- FR 2877858
- FR 2953146
- FR 2953145


### Littérature non-brevet citée dans la description


- **SHEN.** *Corrosion Science,* 2006
- **LIN.** *JAE,* 1999
- **QURAISHI.** *JAE,* 2002